(19)

**Europäisches Patentamt**

**European Patent Office**

**Office européen des brevets**

(11)  **EP 4 679 737 A1**

(12)  **EUROPEAN PATENT APPLICATION**

(43) Date of publication:
14.01.2026  Bulletin 2026/03

(21) Application number: 24187081.5

(22) Date of filing: 08.07.2024

(51) International Patent Classification (IPC):
*H04B 17/14* (2015.01)     *H04B 17/21* (2015.01)

(52) Cooperative Patent Classification (CPC):
**H04B 17/14; H04B 17/21**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventors:
• **OLESEN, Poul**
**Støvring (DK)**

• **ROM, Christian**
**Aalborg (DK)**
• **VOOK, Frederick**
**Schaumburg, IL (US)**
• **MAHENDRA, Rachit**
**Khairabad (IN)**
• **BELLUR, Vinayak**
**Bangalore (IN)**
• **ROSE, Luca**
**Orsay (FR)**

(74) Representative: **Nokia EPO representatives**
**Nokia Technologies Oy**
**Karakaari 7**
**02610 Espoo (FI)**

(54)  **ESTIMATION OF A RESPONSE OF A RADIO CHANNEL, AND ITS APPLICATIONS**

(57)   An apparatus comprising:

means for using a signal transmitted by first transmitter circuitry that is coupled, within the apparatus, to and received by first receiver circuitry and a signal transmitted by the first transmitter circuitry that is coupled, within the apparatus, to and received by second receiver circuitry to determine different reception compensation for application to a signal received at the first receiver circuitry and to a signal received at the second receiver circuitry;

means for using a signal transmitted by the first transmitter circuitry that is coupled, within the apparatus, to and received by the first receiver circuitry and a signal transmitted by second transmitter circuitry that is coupled, within the apparatus, to and received by the first receiver circuitry to determine the different transmission compensation for application to a signal transmitted by the first transmitter circuitry and to a signal transmitted by the second transmitter circuitry.

FIG 5

**EP 4 679 737 A1**

**Description**

TECHNOLOGICAL FIELD

Examples of the disclosure relate to estimation of a response of a radio channel and its applications. Some relate to an improved estimation of a response of a radio channel, and its applications.

BACKGROUND

When a radio channel is estimated, in one direction, at a receiver based on a received signal, transmitted by a transmitter, the estimation includes not only an estimation of a response of the radio channel itself but also a response of the transmitter circuitry and a response of the receiver circuitry.

In radio communications it is desirable to use an accurate estimate of a response of a radio channel.

One example application is pre-compensation (e.g. pre-coding) of transmitted signals such that reception is improved.

BRIEF SUMMARY

According to various, but not necessarily all, examples there is provided examples as defined in the claims, and/or the description.

BRIEF DESCRIPTION

Some examples will now be described with reference to the accompanying drawings in which:

FIGs. 1A, 1B, 1C, 1D show examples of the subject matter described herein;
FIGs. 2A and 2B show examples of the subject matter described herein;
FIG. 3 shows an example of the subject matter described herein;
FIG. 4 shows an example of the subject matter described herein;
FIG. 5 shows an example of the subject matter described herein;
FIG. 6A & 6B show examples of the subject matter described herein;
FIG. 7 shows an example of the subject matter described herein;
FIG. 8A & 8B show examples of the subject matter described herein;
FIG. 9 shows an example of the subject matter described herein;
FIG. 10 shows an example of the subject matter described herein;
FIG. 11 shows an example of the subject matter described herein;
FIG. 12 shows an example of the subject matter described herein;
FIG. 13 shows an example of the subject matter described herein;

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

In some examples, an apparatus estimates a radio channel in a first direction, at receiver circuitry based on a received signal, transmitted in the first direction by a (network) transmitter. Such an estimation includes not only an estimation of the radio channel itself but also a response of the apparatus receiver circuitry and a response of the (network) transmitter circuitry.

In some examples, the apparatus uses the estimate of the radio channel in the first direction to pre-compensate (pre-code) a signal transmitted by the user equipment in a second direction, opposite the first direction. The transmitted signal is, however, affected by a response of the apparatus transmitter circuitry and not by a response of the apparatus receiver circuitry.

It would be desirable to account for the difference between the response of the apparatus receiver circuitry and the response of the apparatus transmitter circuitry in the pre-compensation of the transmitted signal. This would result in the signal being transmitted by the apparatus, when received, being largely independent of the particular apparatus.

In some examples, the apparatus is a user equipment (UE), the first direction is a downlink (DL) direction and the second direction is an uplink (UL) direction. In at least some examples, the (network) transmitter is a transmission-reception point of a radio cellular telecommunications network, for example, at or associated with a base station such as, for example, a gNB.

Thus in some examples, a user equipment (UE) estimates a radio channel in a downlink (DL) direction, at UE receiver circuitry based on a received reference signal, transmitted in the downlink direction by a (network) transmitter. Such an estimation includes not only an estimation of the radio channel itself but also a response of the UE receiver circuitry and a response of the (network) transmitter circuitry. In some examples, a user equipment (UE) uses the estimate of the radio channel in the downlink (DL) direction to pre-compensate (pre-code) a signal transmitted by the user equipment in the uplink (UL) direction. The UE transmitted signal is, however, affected by a response of the UE transmitter circuitry and not by a response of the UE receiver circuitry.

It would be desirable to account for the difference between the response (transfer function) of the UE receiver circuitry and the response (transfer function) of the UE transmitter circuitry via pre-compensation of a UE transmitted signal. This would result in the pre-compensated signal transmitted by the UE, when received, being largely independent of the particular UE.

The UE transmitter circuitry has its own transfer function and the UE receiver circuitry has its own transfer function. If we have knowledge of these transfer functions then we can include them in the compensation of the UE transmitter circuitry to make the UE transmitter circuitry transmit appropriately for the given channel response (measured by the UE receiver circuitry).

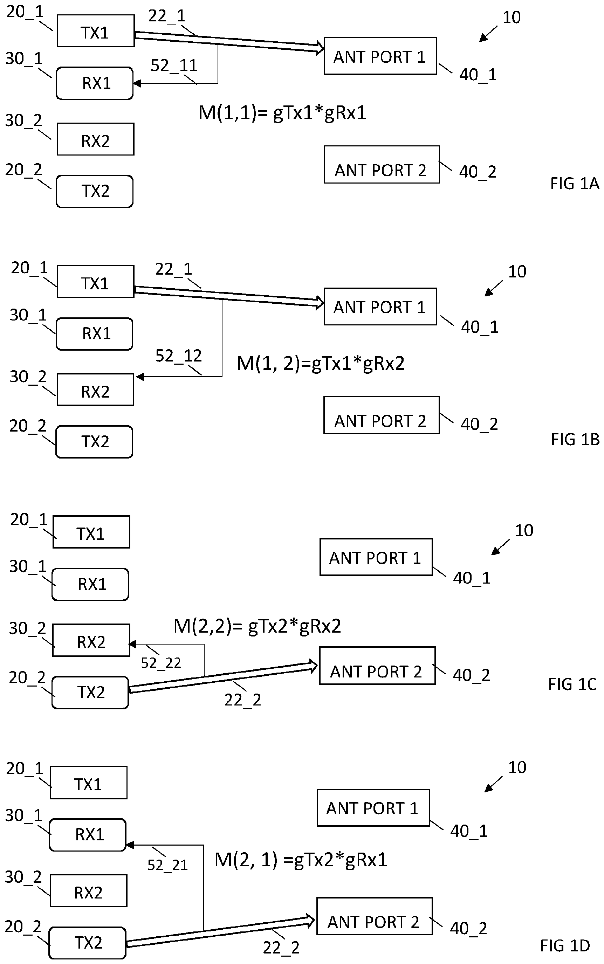

Figs 1A, 1B, 1C, 1D illustrate an apparatus 10. The apparatus 10 comprises a first transmitter circuitry 20_1 for transmitting a signal, a first receiver circuitry 30_1 for receiving a signal; a second receiver circuitry 30_2 for receiving a signal; and second transmitter circuitry 20_2 for transmitting a signal.

In at least some examples, the apparatus 10 is a radio communications apparatus. The first transmitter circuitry 20_1 is for transmitting a radio frequency signal. The first receiver circuitry 30_1 for receiving a radio frequency signal. The second receiver circuitry 30_2 is for receiving a radio frequency signal. The second transmitter circuitry 20_2 for transmitting a radio frequency signal.

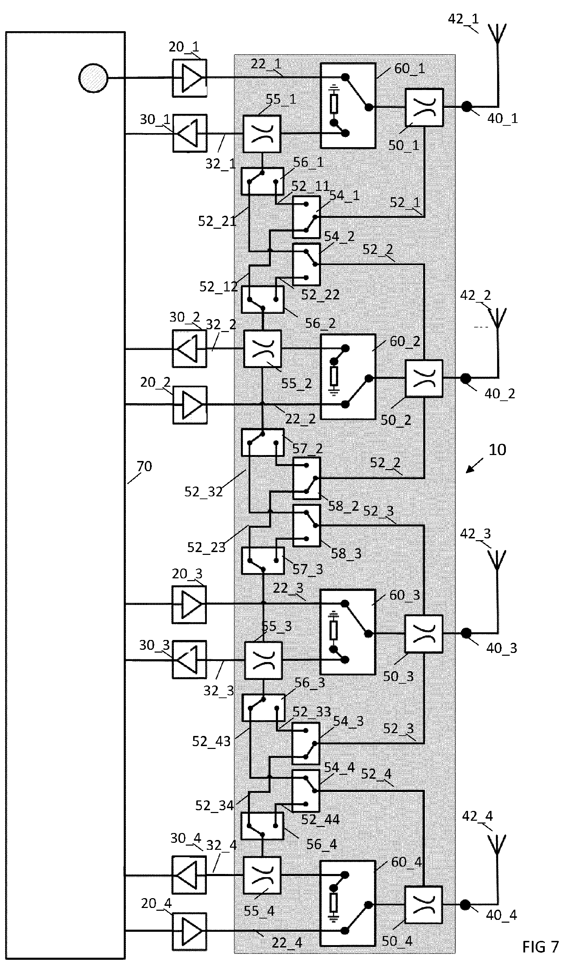

In at least some examples, the radio communications apparatus 10 is a terminal for a cellular radio communications network, for example, a user equipment in a Third generation partnership Project (3GPP) compliant network. The first transmitter circuitry 20_1 is for transmitting a radio signal in a particular uplink (UL) channel (e.g. at a particular frequency band, and optionally at a particular time). The first receiver circuitry 30_1 for receiving a radio signal in a particular downlink (DL) channel (e.g. at a particular frequency band, and optionally at a particular time). The second transmitter circuitry 20_2 is for transmitting a radio signal in a particular uplink (UL) channel (e.g. at a particular frequency band, and optionally at a particular time). The third receiver circuitry 30_3 (not illustrated in FIGs 1A, 1B, 1C, 1D - see FIG 7) for receiving a radio signal in a particular downlink (DL) channel (e.g. at a particular frequency band, and optionally at a particular time).

The use of multiple transmitters can be used for spatial transmit diversity, UL spatial multiplexing, UL multiple-input-multiple-output (UL-MIMO), UL carrier aggregation, UL dual connectivity etc. The use of multiple receivers can be used for spatial reception diversity, DL spatial multiplexing, DL multiple-input-multiple-output (DL-MIMO), DL carrier aggregation, DL dual connectivity etc. In the examples illustrated there are the same number of transmitters and receivers. However, in other implementations there may be different numbers of transmitters and receivers in a transceiver. It is for example, possible to have more receiver circuitry 30_i than transmitter circuitry 20_j.

The apparatus 10 comprises:

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;
means for coupling the first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;
means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1;
means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

In the example illustrated the apparatus 10 comprises multiple antenna ports including a first antenna port and a second antenna port.

The first transmitter circuitry 20_1 and the first receiver circuitry 30_1 are associated with the first antenna port 40_1. The first transmitter circuitry 20_1 is for transmitting a signal via the first antenna port, and the first receiver circuitry 30_1 is for receiving a signal via the first antenna port.

The second transmitter circuitry 20_2 and the second receiver circuitry 30_2 are associated with the second antenna port 40_2. The second transmitter circuitry 20_2 is for transmitting a signal via the second antenna port, and the second receiver circuitry 30_2 is for receiving a signal via the second antenna port.

In some but not necessarily all examples, the first transmitter circuitry 20_1 and the first receiver circuitry 30_1 can be coupled with the first antenna port 40_1 but not the second antenna port 40_2. The first transmitter circuitry 20_1 and the first receiver circuitry 30_1 are exclusively associated with the first antenna port 40_1.

In some but not necessarily all examples, the second transmitter circuitry 20_2 and the second receiver circuitry 30_2 can be coupled with the second antenna port 40_2 but not the first antenna port 40_1. The second transmitter circuitry 20_2 and the second receiver circuitry 30_2 are exclusively associated with the second antenna port 40_2.

Let gTx1 be a response (transfer function) of the first transmitter circuitry 20_1 for transmitting a signal, gTx2 be a response (transfer function) of the second transmitter circuitry 20_2 for transmitting a signal, gTxn be a response (transfer function) of the $n^{th}$ transmitter circuitry 20_n for transmitting a signal.

Let gRx1 be a response (transfer function) of the first receiver circuitry 30_1 for receiving a signal, gRx2 be a response (transfer function) of the second receiver circuitry 30_2 for receiving a signal, gRxm be a response (transfer function) of the $m^{th}$ receiver circuitry 30_m for receiving a signal.

A combined transfer function M(n, m) is the combination (product in frequency domain) of the response (transfer function) for a transmitter circuitry 20_n and the response (transfer function) for a receiver circuitry 30_m.

$$M(n, m) = gTxn^* \, gRxm$$

Dividing a baseband symbol received at the receiver circuitry 30_m by a baseband symbol transmitted by the $n^{th}$ transmitter circuitry 20_n coupled to the receiver circuitry 30_m provides the combined transfer function M(n, m) for the transmitter circuitry 20_n and the receiver circuitry 30_m.

A transmission calibration parameter R(Tx, i, j) for transmitter circuitry 20_j (with respect to transmitter circuitry 20_i) can be obtained from the ratio of combined transfer functions M(i, m) and M(j,m) which are dependent upon the same receiver circuitry 30_m response (transfer function) and different transmitter circuitry 20_i, 20_j responses (transfer functions).

$$R(Tx, i, j)= M(i, m) \, / \, M(j, m) = gTxi^* \, gRxm \, / \, gTxj^* \, gRxm = gTxi \, /gTxj$$

The calibration parameter formed is independent of receiver circuitry.

A reception calibration parameter R(Rx, i, j) for receiver circuitry 30_j (with respect to receiver circuitry 30_i) can be obtained from the ratio of combined transfer functions M(n, i) and M(n, j) which are dependent upon the same transmitter circuitry 20_n response (transfer function) and different receiver circuitry 30_i, 30_j responses (transfer functions).

$$R(Rx, i, j)= M(n, i) \, / \, M(n, j \,) = gTxn^* \, gRxi \, / \, gTxn^* \, gRxj = gRxi \, /gRxj$$

The calibration parameter formed is independent of transmitter circuitry.

Various combined transfer functions M(n, m) can be obtained and used to determine calibration parameters.

Calibration parameters can be used to remove the impact of a particular receiver circuitry 30_i and/or a particular transmitter circuitry 20_j.

When an apparatus 10, for example a user equipment, estimates a response (transfer function) of a downlink channel, the estimate inherently includes the response (transfer function) of the base station transmitter circuitry and the UE receiver circuitry in addition to the response (transfer function) of the actual radio channel. The use of an appropriate reception calibration parameter allows the impact of the UE receiver circuitry to be removed providing a better channel estimate.

If the UE uses the response (transfer function) of a downlink channel, as a response (transfer function) of an uplink channel or to create a response (transfer function) of an uplink channel, the use of an appropriate transmission calibration parameter allows the impact of the UE transmitter circuitry to be removed from the response (transfer function) of an uplink channel. This adjusted response (transfer function) of the uplink channel can be used to precode a transmitted signal so that the signal received at the base station after modification by the transmitter circuitry of the UE and the uplink channel, is as intended.

The use of an estimated response (transfer function) of a downlink channel, as a response (transfer function) of an uplink channel for precoding or to create a response (transfer function) of an uplink channel for precoding, is known to those skilled in the art. What is new is that the apparatus itself improves the estimate used for precoding by taking into account the impact of the receiver circuitry and transmitter circuitry involved at the apparatus 10 and achieves transmission-reception reciprocity.

If transmitter circuitry 20_n and the receiver circuitry 30_m are associated, in operation, with the same antenna port(s) (same transceiver), then the combined transfer function M(n, m) is a mutual-combined transfer function, for example M(n, n).

If transmitter circuitry 20_n and the receiver circuitry 30_m are associated, in operation, with different antenna port(s) (different transceiver), the combined transfer function M(n, m) is a cross-combined transfer function, for example M(n, n+i) where i ≠ 0.

Dividing the mutual-combined transfer function M(i, i) for the transmitter circuitry 20_i and the first receiver circuitry 30_i (same antenna port) by the cross-combined transfer function M(i, j) for the transmitter circuitry 20_i and the receiver circuitry 30_j (different antenna ports) provides the reception calibration parameter R(Rx, i, j). R(Rx, i, j)= M(i, i) / M(i, j) = gTxi* gRxi / gTxi* gRxj = gRxi /gRxj. It can be desirable for j to be adjacent i. That is j=i+1 or j=i -1. The routing required to determine the cross-combined transfer function M(i, j) is thus minimized. The apparatus 10 can perform this calculation.

Dividing the mutual-combined transfer function M(i, i) for the transmitter circuitry 20_i and the first receiver circuitry 30_i (same antenna port) by the cross-combined transfer function M(j, i) for the transmitter circuitry 20_j and the receiver circuitry 30_i (different antenna ports) provides the transmission calibration parameter R(Tx, i, j). R(Tx, i, j)= M(i, i) / M(j, i ) = gTxi* gRxi / gTxj* gRxi = gTxi /gTxj . It can be desirable for j to be adjacent i. That is j=i+1 or j=i -1. The routing required to determine the cross-combined transfer function M(j, i) is thus minimized. The apparatus 10 can perform this calculation.

FIG1A illustrates an example where first transmitter circuitry 20_1 is coupled, within the apparatus 10, to the first receiver circuitry 30_1. A signal transmitted by the first transmitter circuitry 20_1 along first transmission path 22_1 is coupled, within the apparatus 10 along path 52_11, for reception by the first receiver circuitry 30_1.

Dividing a baseband symbol received at the first receiver circuitry 30_1 via path 52_11 by a baseband symbol transmitted by the first transmitter circuitry 20_1 coupled to the first receiver circuitry 30_1 provides the combined transfer function M(1, 1)= gTx1* gRx1 for the first transmitter circuitry 20_1 and the first receiver circuitry 30_1.

FIG1B illustrates an example where first transmitter circuitry 20_1 is coupled, within the apparatus 10, to the second receiver circuitry 30_2. A signal transmitted by the first transmitter circuitry 20_1 along a first transmission path 22_1 is coupled, within the apparatus 10 along path 52_12, for reception by the second receiver circuitry 30_2. Dividing a baseband symbol received at the second receiver circuitry 30_2 via path 52_12 by a baseband symbol transmitted by the first transmitter circuitry 20_1 coupled to the second receiver circuitry 30_2 provides the combined transfer function M(1, 2) = gTx1* gRx2 for the first transmitter circuitry 20_1 and the second receiver circuitry 30_2.

FIG1C illustrates an example where second transmitter circuitry 20_2 is coupled, within the apparatus 10, to the second receiver circuitry 30_2. A signal transmitted by the second transmitter circuitry 20_2 along a second transmission path 22_2 is coupled, within the apparatus 10 along path 52_22, for reception by the second receiver circuitry 30_2. Dividing a baseband symbol received at the second receiver circuitry 30_2 via path 52_22 by a baseband symbol transmitted by the second transmitter circuitry 20_2 coupled to the second receiver circuitry 30_2 provides the combined transfer function M(2, 2)= gTx2* gRx2 for the second transmitter circuitry 20_2 and the second receiver circuitry 30_2.

FIG1 D illustrates an example where second transmitter circuitry 20_2 is coupled, within the apparatus 10, to the first receiver circuitry 30_1. A signal transmitted by the second transmitter circuitry 20_2 along the second transmission path 22_2 is coupled, within the apparatus 10 via path 52_21, for reception by the first receiver circuitry 30_1. Dividing a baseband symbol received at the first receiver circuitry 30_1 via path 52_21 by a baseband symbol transmitted by the second transmitter circuitry 20_2 coupled to the first receiver circuitry 30_1 provides the combined transfer function M(2, 1) = gTx2* gRx1 for the second transmitter circuitry 20_2 and the first receiver circuitry 30_1.

In general ith transmitter circuitry 20_i is coupled, within the apparatus 10, to the jth receiver circuitry 30_j. A signal transmitted by the ith transmitter circuitry 20_i along the ith transmission path 22_i is coupled, within the apparatus 10 via path 52_ij, for reception by the jth receiver circuitry 30_j. Dividing a baseband symbol received at the jth receiver circuitry 30_j via path 52_ij by a baseband symbol transmitted by the ith transmitter circuitry 20_i coupled to the jth receiver circuitry 30_j provides the combined transfer function M(i, j)= gTxi* gRxj for the ith transmitter circuitry 20_i and the ith receiver circuitry 30_j.j.

The combined transfer function M(1, 1) and the combined transfer function M(2,2) are mutual combined transfer functions. They are obtained using intra-transceiver routing.

The combined transfer function M(1, 2) and the combined transfer function M(2,1) are cross combined transfer functions. They are obtained using inter-transceiver routing.

The apparatus 10 can calculate the ratio of mutual combined transfer functions to cross combined transfer functions to determine various reception calibration parameters and transmission calibration parameters.

The ratio of the mutual combined transfer function to the cross combined transfer function, where the ratio has common transmitter circuitry and different receiver circuitry, provides reception calibration parameters.

The ratio of the mutual combined transfer function to the cross combined transfer function, where the ratio has common receiver circuitry and different transmitter circuitry, provides transmission calibration parameters.

The ratio of the mutual combined transfer function M(1, 1) to the cross combined transfer function M(1, 2), which ratio has a common transmitter circuitry and different receiver circuitry, provides a reception calibration parameter R(Rx, 1, 2) for the second receiver circuitry 30_2 (with respect to the first receiver circuitry 30_1):

$$R(Rx, 1, 2) = M(1, 1) / M(1, 2) = gTx1 * gRx1 / gTx1 * gRx2 = gRx1 / gRx2$$

If first receiver circuitry 30_1 (Rx 1) is a reference, R(Rx, 1, 2) will be applied to the second receiver circuitry 30_2 for calibration relative to first receiver circuitry 30_1. No calibration required for first receiver circuitry 30_1.

The ratio of the mutual combined transfer function M(1, 1) and the cross combined transfer function M(2, 1), which has a common receiver circuitry and different transmitter circuitry, provides a transmission calibration parameter R(Tx, 1, 2) for the second transmitter circuitry 20_2:

$$R(Tx, 1, 2) = M(1, 1) / M(2, 1) = gTx1 * gRx1 / gTx2 * gRx1 = gTx1 / gTx2$$

If first transmitter circuitry 20_1 (Tx 1) is a reference, R(Tx, 1, 2) will be applied to second transmitter circuitry 20_2 for calibration relative to first transmitter circuitry 20_1. No calibration required for first transmitter circuitry 20_1.

The ratio of the mutual combined transfer function M(2, 2) and the cross combined transfer function M(2, 1), which has a common transmitter circuitry and different receiver circuitry, provides a reception calibration parameter R(Rx, 2, 1) for the first receiver circuitry 30_1: R(Rx, 2, 1) = M(2, 2) / M(2, 1) = gTx2 * gRx2 / gTx2 * gRx1 = gRx2 / gRx1

If second receiver circuitry 30_2 (Rx 2) is a reference, R(Rx, 2, 1) will be applied to first receiver circuitry 30_1 for calibration relative to second receiver circuitry 30_2. No calibration required for second receiver circuitry 30_2.

As R(Rx, 2, 1) = 1/ R(Rx, 1, 2), only one of R(Rx, 2, 1) and R(Rx, 1, 2) needs to be determined from measurement.

If R(Rx, 1,2) is to be used then M(1,1) and M(1,2) requires the coupling illustrated in FIGs 1A and 1B but not the coupling illustrated in FIG 1C and 1D.

If R(Rx, 2, 1) is to be used then M(2,2) and M(2,1) requires the coupling illustrated in FIGs 1C and 1D but not the coupling illustrated in FIG 1A and 1B.

The ratio of the mutual combined transfer function M(2, 2) and the cross combined transfer function M(1, 2), which has a common receiver circuitry and different transmitter circuitry, provides a transmission calibration parameter R(Tx, 2, 1) for the first transmitter circuitry 20_1: R(Tx, 2, 1) = M(2, 2) / M(1, 2) = gTx2 * gRx2 / gTx1 * gRx2 = gTx2 / gTx1

If second transmitter circuitry 20_2 (Tx 2) is a reference, R(Tx, 2, 1) will be applied to first transmitter circuitry 20_1 for calibration relative to second transmitter circuitry 20_2. No calibration required for second transmitter circuitry 20_2.

As R(Tx, 2, 1) = 1/ R(Tx, 1, 2), only one of R(Tx, 2, 1) and R(Tx, 1,2) needs to be determined from measurement.

If R(Tx, 1, 2) is to be used then M(1,1) and M(2,1) requires the coupling illustrated in FIGs 1A and 1D but not the coupling illustrated in FIG 1B and 1C.

If R(Tx, 2, 1) is to be used then M(2,2) and M(1,2) requires the coupling illustrated in FIGs 1C and 1B but not the coupling illustrated in FIG 1A and 1D.

| Coupling | FIG. 1A | FIG. 1B | FIG. 1C | FIG. 1D |
|---|---|---|---|---|
| R(Rx, 1,2) | Y | Y | | |
| R(Rx, 2, 1) | | | Y | Y |
| R(Tx, 1, 2) | Y | | | Y |
| R(Tx, 2, 1) | | Y | Y | |

Thus if R(Rx, 1, 2) and R(Tx, 1, 2) are to be used then the coupling illustrated in FIGs 1A, 1B and 1D but not 1C is required.

Thus is R(Rx, 1,2) and R(Tx, 2, 1) are to be used then the coupling illustrated in FIGs 1A, 1B and 1C but not 1D is required.

Thus is R(Rx, 2, 1) and R(Tx, 1, 2) are to be used then the coupling illustrated in FIGs 1C, 1D and 1A but not 1B is required.

Thus is R(Rx, 2, 1) and R(Tx, 2, 1) are to be used then the coupling illustrated in FIGs 1B, 1C and 1D but not 1A is required.

That is three of the four couplings illustrated are required. However, there may be advantages in having coupling circuitry capable of making the four combinations even if only three of the four coupling combinations are required.

In general an apparatus 10 comprises means for coupling:

the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;

first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;

the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

However, it optionally comprises the additional coupling means, means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1.

In at least some examples, the apparatus 10 has means for using a signal transmitted by the first transmitter circuitry that is coupled, within the apparatus, to and received by the first receiver circuitry and a signal transmitted by the first transmitter circuitry that is coupled, within the apparatus, to and received by the second receiver circuitry to determine different reception compensation for application to a signal received at the first receiver circuitry and to a signal received at the second receiver circuitry.

In at least some examples, the apparatus 10 comprises means for using a signal transmitted by the first transmitter circuitry that is coupled, within the apparatus, to and received by the first receiver circuitry and a signal transmitted by the second transmitter circuitry that is coupled, within the apparatus, to and received by the first receiver circuitry to determine the different transmission compensation for application to a signal transmitted by the first transmitter circuitry and to a signal transmitted by the second transmitter circuitry.

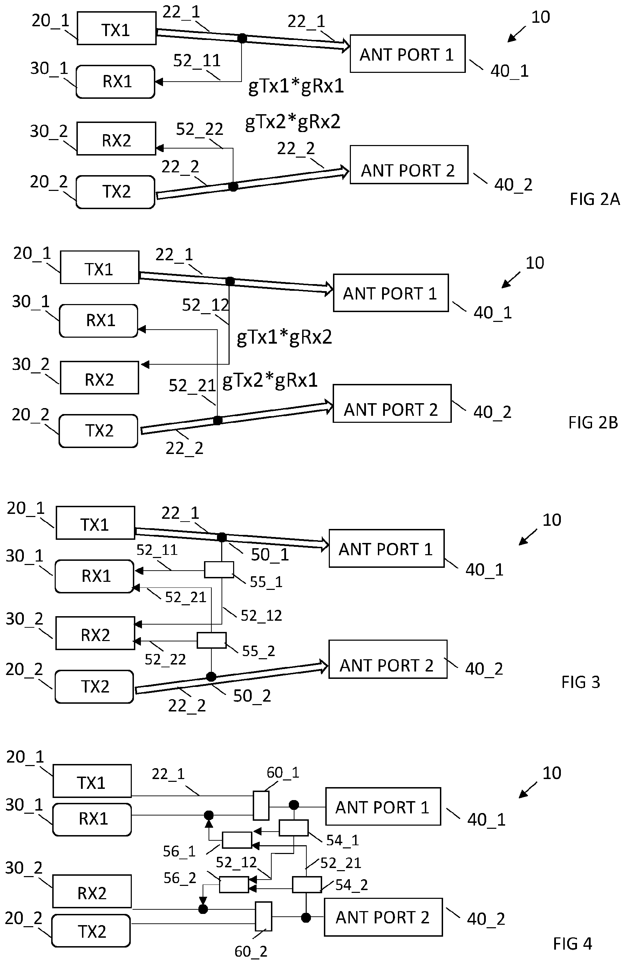

FIG 2A combines FIGs 1A and 1C and illustrates that coupling of the first transmitter 20_1 to the first receiver circuitry 30_1 can be independent of coupling of second transmitter 20_2 to the second receiver circuitry 30_2 and, if appropriate, can be performed simultaneously.

FIG 2B combines FIGs 1 B and 1D and illustrates that coupling of the first transmitter 20_1 to the second receiver circuitry 30_2 can be independent of coupling of second transmitter 20_2 to the first receiver circuitry 30_1 and, if appropriate, can be performed simultaneously.

FIG 3 illustrates coupling circuitry suitable for performing the coupling previously described.

The coupling circuitry is configured to couple:

the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;

first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;

the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1;

the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2;

The coupling circuitry is configured as a switching network.

The first transmitter circuitry 20_1 is coupled via a coupler 50_1 to a first switching circuit 55_1. The first switching circuitry 55_1 is configured to, at least, selectively couple the first transmitter circuitry 20_1 to the first receiver circuitry 30_1 or to the second receiver circuitry 30_2. In at least some examples, the first switching circuitry 55_1 is configured to selectively de-couple the first transmitter circuitry 20_1 from the first receiver circuitry 30_1 and/or from the second receiver circuitry 30_2.

The second transmitter circuitry 20_2 is coupled via a coupler 50_2 to a second switching circuit 55_2. The second switching circuitry 55_2 is configured to, at least, selectively couple the second transmitter circuitry 20_2 to the first receiver circuitry 30_1 or to the second receiver circuitry 30_2. In at least some examples, the second switching circuitry 55_2 is configured to selectively de-couple the second transmitter circuitry 20_2 from the first receiver circuitry 30_1 and from the second receiver circuitry 30_2.

FIG 4, illustrates an example of the apparatus and switching network illustrated in FIG 3. In this example, the first switching circuit 55_1 and the second switching circuit 55_2 are provided using first transmit (Tx) switch circuitry 54_1, second Tx switch circuitry 54_2, first receive (Rx) switch circuitry 56_1, and second Rx switch circuitry 56_2.

The first Tx switch circuitry 54_1 is configured to selectively couple the first transmitter circuitry 20_1 towards the first receiver circuitry 30_1 or the second receiver circuitry 30_2. The second Tx switch circuitry 54_2 is configured to selectively couple the second transmitter circuitry 20_2 towards the first receiver circuitry 30_1 or the second receiver circuitry 30_2. The first Rx switch circuitry 56_1 is configured to selectively couple the first receiver circuitry 30_1 towards the first transmitter circuitry 20_1 or the second transmitter circuitry 20_2. The second Rx switch circuitry 56_2 is configured to selectively couple the second receiver circuitry 30_2 towards the first transmitter circuitry 20_1 or the second transmitter circuitry 20_2.

The first transmitter circuitry 20_1 is coupled with the first receiver circuitry 30_1 when the first Tx switch circuitry 54_1 is configured to selectively couple the first transmitter circuitry 20_1 towards the first receiver circuitry 30_1 and the first Rx switch circuitry 56_1 is configured to selectively couple the first receiver circuitry 30_1 towards the first transmitter circuitry 20_1.

The first transmitter circuitry 20_1 is coupled with the second receiver circuitry 30_2 when the first Tx switch circuitry 54_1 is configured to selectively couple the first transmitter circuitry 20_1 towards the second receiver circuitry 30_2 and the second Rx switch circuitry 56_2 is configured to selectively couple the second receiver circuitry 30_2 towards the first transmitter circuitry 20_1.

The second transmitter circuitry 20_2 is coupled with the first receiver circuitry 30_1 when the second Tx switch circuitry 54_2 is configured to selectively couple the second transmitter circuitry 20_2 towards the first receiver circuitry 30_1 and the first Rx switch circuitry 56_1 is configured to selectively couple the first receiver circuitry 30_1 towards the second transmitter circuitry 20_2.

The second transmitter circuitry 20_2 is coupled with the second receiver circuitry 30_2 when the second Tx switch circuitry 54_2 is configured to selectively couple the second transmitter circuitry 20_2 towards the second receiver circuitry 30_2 and the second Rx switch circuitry 56_2 is configured to selectively couple the second receiver circuitry 30_2 towards the second transmitter circuitry 20_2.

In some examples, the first transmitter circuitry 20_1 is de-coupled from the first receiver circuitry 30_1 and second receiver circuitry 30_2 when the first Tx switch circuitry 54_1 is configured to selectively couple the first transmitter circuitry 20_1 towards the first receiver circuitry 30_1 and the first Rx switch circuitry 56_1 is configured to selectively couple the first receiver circuitry 30_1 towards the second transmitter circuitry 20_2. In other examples, the first transmitter circuitry 20_1 is de-coupled from the first receiver circuitry 30_1 and second receiver circuitry 30_2 when the first Tx switch circuitry 54_1 is configured to selectively couple the first transmitter circuitry 20_1 towards the second receiver circuitry 30_2 and the second Rx switch circuitry 56_1 is configured to selectively couple the second receiver circuitry 30_2 towards the second transmitter circuitry 20_2.

In some examples, the second transmitter circuitry 20_2 is de-coupled from the first receiver circuitry 30_1 and second receiver circuitry 30_2 when the second Tx switch circuitry 54_2 is configured to selectively couple the second transmitter circuitry 20_2 towards the second receiver circuitry 30_2 and second Rx switch circuitry 56_2 is configured to selectively couple the second receiver circuitry 30_2 towards the first transmitter circuitry 20_1. In other examples, the second transmitter circuitry 20_2 is de-coupled from the first receiver circuitry 30_1 and second receiver circuitry 30_2 when the second Tx switch circuitry 54_2 is configured to selectively couple the second transmitter circuitry 20_2 towards the first receiver circuitry 30_1 and first Rx switch circuitry 56_1 is configured to selectively couple the first receiver circuitry 30_1 towards the first transmitter circuitry 20_1.

The first transmitter circuitry 20_1 is coupled with the first receiver circuitry 30_1 and the second transmitter circuitry 20_2 is simultaneously coupled to the second receiver circuitry 30_2 when

the first Tx switch circuitry 54_1 is configured to selectively couple the first transmitter circuitry 20_1 towards the first receiver circuitry 30_1,
the first Rx switch circuitry 56_1 is configured to selectively couple the first receiver circuitry 30_1 towards the first transmitter circuitry 20_1,
the second Tx switch circuitry 54_2 is configured to selectively couple the second transmitter circuitry 20_2 towards the second receiver circuitry 30_2 and
the second Rx switch circuitry 56_2 is configured to selectively couple the second receiver circuitry 30_2 towards the second transmitter circuitry 20_2.

The first transmitter circuitry 20_1 is coupled with the second receiver circuitry 30_2 and the second transmitter circuitry 20_2 is simultaneously coupled to the first receiver circuitry 30_1 when

the first Tx switch circuitry 54_1 is configured to selectively couple the first transmitter circuitry 20_1 towards the second receiver circuitry 30_2;

the second Rx switch circuitry 56_2 is configured to selectively couple the second receiver circuitry 30_2 towards the first transmitter circuitry 20_1;

the second Tx switch circuitry 54_2 is configured to selectively couple the second transmitter circuitry 20_2 towards the first receiver circuitry 30_1; and

the first Rx switch circuitry 56_1 is configured to selectively couple the first receiver circuitry 30_1 towards the second transmitter circuitry 20_2.

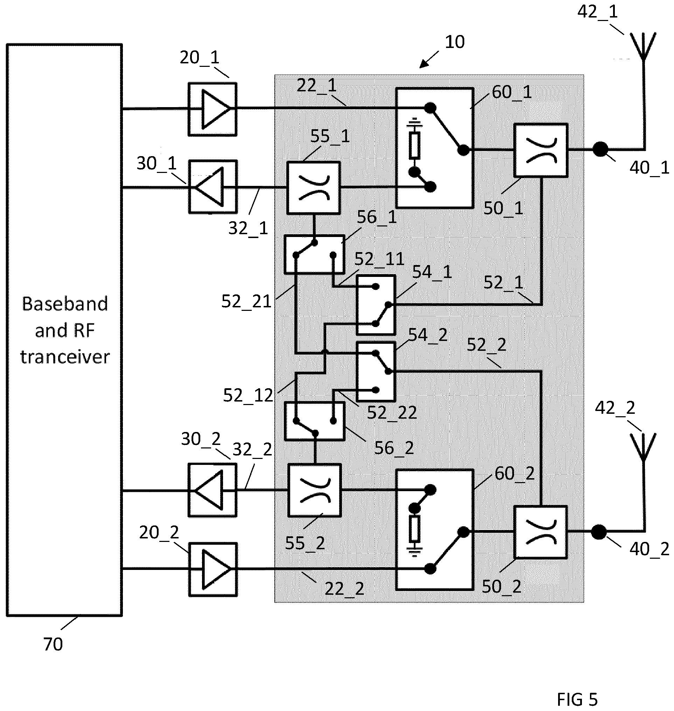

FIG 5 illustrates an example of the apparatus 10 as previously described. In this example, a first antenna 42_1 is coupled to the first antenna port 40_1 and a second antenna 42_2 is coupled to the second antenna port 40_2. A baseband and radio frequency transceiver circuitry 70 is coupled to the first transmitter circuitry 20_1, the first receiver circuitry 30_1, the second transmitter circuitry 20_2, and the second receiver circuitry 30_2.

A first out-coupler 50_1, for example a directional coupler, couples a signal transmitted by the first transmitter 20_1 from the first transmission path 22_1 onto first out-coupled path 52_1 which terminates at the input to a first Tx switch 54_1.

A second out-coupler 50_2, for example a directional coupler, couples a signal transmitted by the second transmitter 20_2 from the second transmission path 22_2 onto second out-coupled path 52_2 which terminates at the input to a second Tx switch 54_2.

A first in-coupler 55_1, for example a directional coupler, couples a first reception path 32_1 to the first receiver circuitry 30_1, with the switched output from the first Rx switch 56_1. A second in-coupler 55_2, for example a directional coupler, couples a second reception path 32_2 to the second receiver circuitry 30_2, with the switched output from the second Rx switch 56_2.

A first time-division-duplex (TDD) switch 60_1, which is optional, is used to switch the first antenna 42_1 between the first transmitter circuitry 20_1 and the first receiver circuitry 30_1. A second time-division-duplex (TDD) switch 60_2, which is optional, is used to switch the second antenna 42_2 between the second transmitter circuitry 20_2 and the second receiver circuitry 30_2.

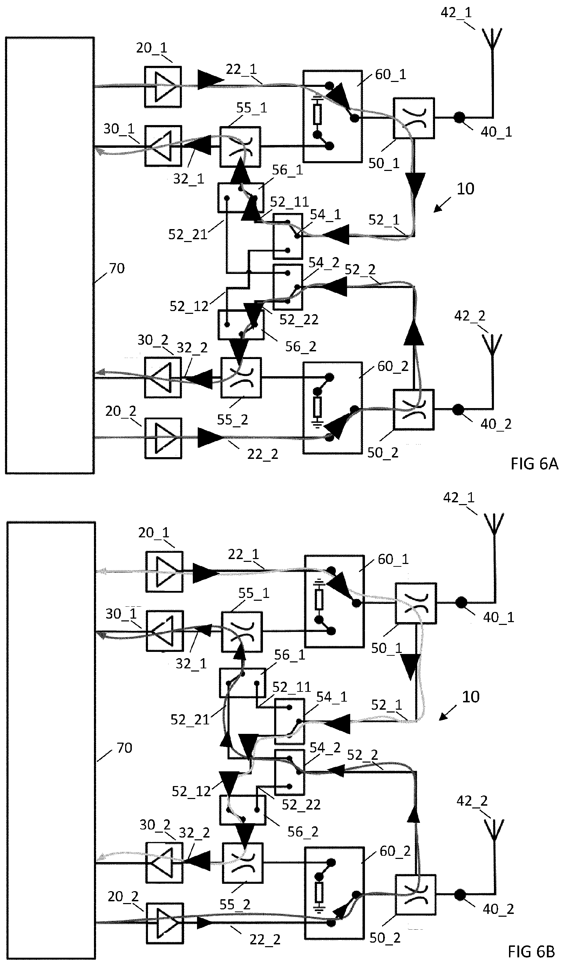

FIG 6A illustrates operation of the circuitry illustrated in FIG 5. The dark arrows illustrate coupling paths. One coupling path extends from the first transmitter circuitry 20_1 to the first receiver circuitry 30_1 and an independent and separate path extends from the second transmitter circuitry 20_2, simultaneously, to the second receiver circuitry 30_2.

The first transmitter circuitry 20_1 is coupled with the first receiver circuitry 30_1 and the second transmitter circuitry 20_2 is simultaneously coupled to the second receiver circuitry 30_2 when

the first Tx switch circuitry 54_1 is configured to selectively couple the first transmitter circuitry 20_1 towards the first Rx switch circuitry 56_1,

the first Rx switch circuitry 56_1 is configured to selectively couple the first receiver circuitry 30_1 towards the first Tx switch circuitry 54_1,

and

the second Tx switch circuitry 54_2 is configured to selectively couple the second transmitter circuitry 20_2 towards the second Rx switch circuitry 56_2 and

the second Rx switch circuitry 56_2 is configured to selectively couple the second receiver circuitry 30_2 towards the second Tx switch circuitry 54_2.

FIG 6B illustrates operation of the circuitry illustrated in FIG 5. FIG 6B illustrates operation of the circuitry illustrated in FIG 6A but at a different time. The dark arrows illustrate coupling paths. One coupling path, indicated by larger dark arrows, extends from the first transmitter circuitry 20_1 to the second receiver circuitry 30_2 and an independent and separate coupling path, indicated by smaller dark arrows, extends from the second transmitter circuitry 20_2, simultaneously, to the first receiver circuitry 30_1.

The first transmitter circuitry 20_1 is coupled with the second receiver circuitry 30_2 and the second transmitter circuitry 20_2 is simultaneously coupled to the first receiver circuitry 30_1 when

the first Tx switch circuitry 54_1 is configured to selectively couple the first transmitter circuitry 20_1 towards the second Rx switch circuitry 56_2;

the second Rx switch circuitry 56_2 is configured to selectively couple the second receiver circuitry 30_2 towards the first Tx switch circuitry 54_1;

and

the second Tx switch circuitry 54_2 is configured to selectively couple the second transmitter circuitry 20_2 towards the first Rx switch circuitry 56_1; and

the first Rx switch circuitry 56_1 is configured to selectively couple the first receiver circuitry 30_1 towards the second Tx switch circuitry 54_2.

FIG 7 extends the example described to additional transmitter circuitry and receiver circuitry. The upper portion of FIG 7 reproduces the circuitry previously described with reference to FIG 5, 6A, 6B.

The lower upper portion of FIG 7 illustrates circuitry similar to that previously described with reference to FIG 5, 6A, 6B. The circuitry is different in that third transmitter circuitry 20_3 replaces the first transmitter circuitry 20_1, that fourth transmitter circuitry 20_4 replaces the second transmitter circuitry 20_2, that third receiver circuitry 30_3 replaces the first receiver circuitry 30_1, that fourth receiver circuitry 30_4 replaces the second receiver circuitry 30_2, the third antenna 42_3 and third antenna port 40_3 replace the first antenna 42_1 and first antenna port 40_1, the fourth antenna 42_4 and forth antenna port 40_4 replace the second antenna 42_2 and second antenna port 40_2.

A third transmission path 22_3 extends from the third transmitter circuitry 20_3 to the third antenna port 40_3 via a third TDD switch 60_3 and a third reception path 32_3 extends towards the third receiver circuitry 30_3 from the third antenna port 40_3 via the third TDD switch 60_3. A fourth transmission path 22_4 extends from the fourth transmitter circuitry 20_4 to the fourth antenna port 40_4 via a fourth TDD switch 60_4 and a fourth reception path 32_4 extends towards the fourth receiver circuitry 30_4 from the fourth antenna port 40_4 via a fourth TDD switch 60_4.

A third out-coupler 50_3, for example a directional coupler, is configured to couple a signal transmitted by the third transmitter circuitry 20_3 from the third transmission path 22_3 onto a third out-coupled path 52_3 which terminates at the input to third Tx switch circuitry 54_3. A fourth out-coupler 50_4, for example a directional coupler, couples a signal transmitted by the fourth transmitter 20_4 from the fourth transmission path 22_4 onto a fourth out-coupled path 52_4 which terminates at the input to a fourth Tx switch circuitry 54_4.

A third in-coupler 55_3, for example a directional coupler, couples a third reception path 32_3 to the third receiver circuitry 30_3, with a switched output from a third Rx switch circuitry 56_3. A fourth in-coupler 55_4, for example a directional coupler, couples a fourth reception path 32_4 to the fourth receiver circuitry 30_4, with the switched output from the fourth Rx switch circuitry 56_4. A third time-division-duplex (TDD) switch 60_3, which is optional, is used to switch the third antenna 42_3 between the third transmitter circuitry 20_3 and the third receiver circuitry 30_3. A fourth time-division-duplex (TDD) switch 60_4, which is optional, is used to switch the fourth antenna 42_4 between the fourth transmitter circuitry 20_4 and the fourth receiver circuitry 30_4.

The apparatus can configure a coupling path that extends from the third transmitter circuitry 20_3 to the third receiver circuitry 30_3. The third Tx switch circuitry 54_3 is configured to selectively couple the third transmitter circuitry 20_3 towards the third Rx switch circuitry 56_3 and the third Rx switch circuitry 56_3 is configured to selectively couple the third receiver circuitry 30_3 towards the third Tx switch circuitry 54_3.

The apparatus can configure a coupling path that extends from the fourth transmitter circuitry 20_4 to the fourth receiver circuitry 30_4. The fourth Tx switch circuitry 54_4 is configured to selectively couple the fourth transmitter circuitry 20_4 towards the fourth Rx switch circuitry 56_4 and the fourth Rx switch circuitry 56_4 is configured to selectively couple the fourth receiver circuitry 30_4 towards the fourth Tx switch circuitry 54_4.

The apparatus can simultaneously couple the third transmitter circuitry 20_3 to the third receiver circuitry 30_3 and the fourth transmitter circuitry 20_4 to the fourth receiver circuitry 30_4.

The apparatus can configure a coupling path that extends from the third transmitter circuitry 20_3 to the fourth receiver circuitry 30_4. The third Tx switch circuitry 54_3 is configured to selectively couple the third transmitter circuitry 20_3 towards the fourth Rx switch circuitry 56_4 and the fourth Rx switch circuitry 56_4 is configured to selectively couple the fourth receiver circuitry 30_4 towards the third Tx switch circuitry 54_3.

The apparatus can configure a coupling path that extends from the fourth transmitter circuitry 20_4 to the third receiver circuitry 30_3. The fourth Tx switch circuitry 54_4 is configured to selectively couple the fourth transmitter circuitry 20_4 towards the third Rx switch circuitry 56_3 and the third Rx switch circuitry 56_3 is configured to selectively couple the third receiver circuitry 30_3 towards the fourth Tx switch circuitry 54_4.

The apparatus can simultaneously couple the third transmitter circuitry 20_3 to the fourth receiver circuitry 30_4 and the fourth transmitter circuitry 20_4 to the third receiver circuitry 30_3.

The apparatus can configure a coupling path that extends from the second transmitter circuitry 20_2 to the third receiver circuitry 30_3. This is between (inter) transceivers. The second out-coupler 50_2 is configured to couple a signal transmitted by the second transmitter circuitry 20_2 from the second transmission path 22_2 onto a second out-coupled path 52_2 which terminates at an input to inter Tx switch circuitry 58_2. The third in-coupler 55_3 is configured to couple the third reception path 32_3 (to the third receiver circuitry 30_3), with a switched output from the inter Rx switch circuitry 57_3.

The apparatus can configure a coupling path that extends from the third transmitter circuitry 20_3 to the second receiver circuitry 30_2. This is between (inter) transceivers. The third out-coupler 50_3 is configured to couple a signal transmitted by the third transmitter circuitry 20_3 from the third transmission path 22_3 onto a third out-coupled path 52_3 which terminates at an input to inter Tx switch circuitry 58_3. The in-coupler 55_2 is configured to couple the second reception path 32_2 (to the second receiver circuitry 30_2), with a switched output from the inter Rx switch circuitry 57_2.

The apparatus 10 can therefore be used to determine the combined transfer functions:

mutual combined transfer functions: M(1,1), M(2,2); M(3,3), M(4,4)
(inter-transceiver) cross combined transfer functions: M(1,2), M(2,1); M(3,4), M(4,3);
(inter-transceiver) cross combined transfer functions: M(2,3), M(3,2);

The following reception calibration parameters can be determined:

$$R(Rx, 1, 2) = M(1, 1) / M(1, 2) = gTx1^* \, gRx1 / gTx1^* \, gRx2 = gRx1 / gRx2$$

$$R(Rx, 2, 3) = M(2, 2) / M(2, 3) = gTx2^* \, gRx2 / gTx2^* \, gRx3 = gRx2 / gRx3$$

$$R(Rx, 3, 4) = M(3, 3) / M(3, 4) = gTx3^* \, gRx3 / gTx3^* \, gRx4 = gRx3 / gRx4$$

The following transmission calibration parameters can be determined:

$$R(Tx, 1, 2) = M(1, 1) / M(2, 1) = gTx1^* \, gRx1 / gTx2^* \, gRx1 = gTx1 / gTx2$$

$$R(Tx, 2, 3) = M(2, 2) / M(3, 2) = gTx2^* \, gRx2 / gTx3^* \, gRx2 = gTx2 / gTx3$$

$$R(Tx, 3, 4) = M(3, 3) / M(4, 3) = gTx3^* \, gRx3 / gTx4^* \, gRx3 = gTx3 / gTx4$$

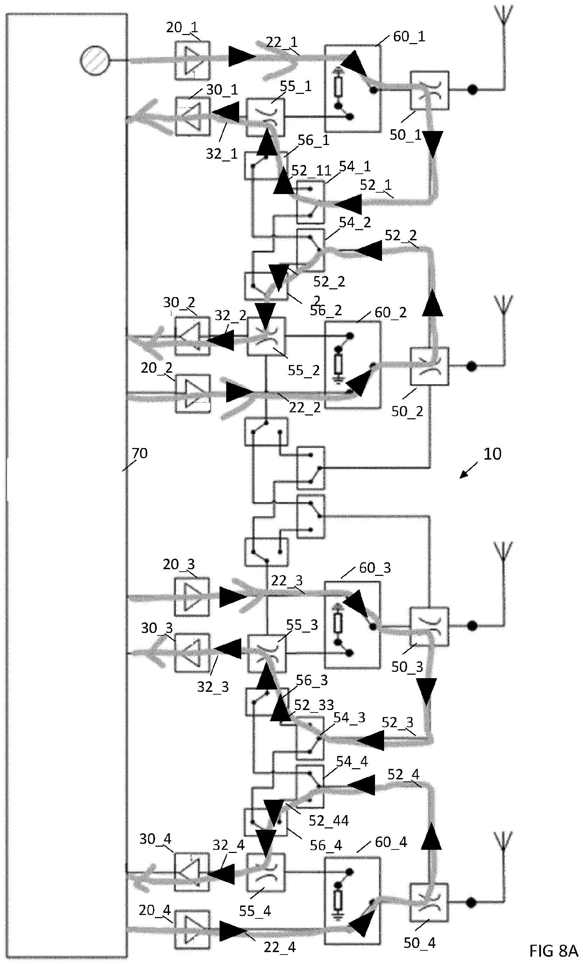

FIG 8A illustrates operation of the circuitry illustrated in FIG 7. The dark arrows illustrate coupling paths. One coupling path extends from the first transmitter circuitry 20_1 to the first receiver circuitry 30_1, an independent and separate coupling path extends from the second transmitter circuitry 20_2, simultaneously, to the second receiver circuitry 30_2, an independent and separate coupling path extends from the third transmitter circuitry 20_3, simultaneously, to the third receiver circuitry 30_3, an independent and separate coupling path extends from the fourth transmitter circuitry 20_4, simultaneously, to the fourth receiver circuitry 30_4.

The first Tx switch circuitry 54_1 is configured to selectively couple the first transmitter circuitry 20_1 towards the first Rx switch circuitry 56_1. The first Rx switch circuitry 56_1 is configured to selectively couple the first receiver circuitry 30_1 towards the first Tx switch circuitry 54_1.

The second Tx switch circuitry 54_2 is configured to selectively couple the second transmitter circuitry 20_2 towards the second Rx switch circuitry 56_2. The second Rx switch circuitry 56_2 is configured to selectively couple the second receiver circuitry 30_2 towards the second Tx switch circuitry 54_2.

The third Tx switch circuitry 54_3 is configured to selectively couple the third transmitter circuitry 20_3 towards the third Rx switch circuitry 56_3. The third Rx switch circuitry 56_3 is configured to selectively couple the third receiver circuitry 30_3 towards the third Tx switch circuitry 54_3.

The fourth Tx switch circuitry 54_4 is configured to selectively couple the fourth transmitter circuitry 20_4 towards the fourth Rx switch circuitry 56_4. The fourth Rx switch circuitry 56_4 is configured to selectively couple the fourth receiver circuitry 30_4 towards the fourth Tx switch circuitry 54_4.

This enables the measurement of M(1, 1), M(2, 2), M(3, 3), M(4, 4).

$$M(1, 1) = gTx1^* \, gRx1$$

$$M(2, 2) = gTx2^* \, gRx2$$

$$M(3, 3) = gTx3^* \, gRx3$$

$$M(4, 4) = gTx4^* \, gRx4$$

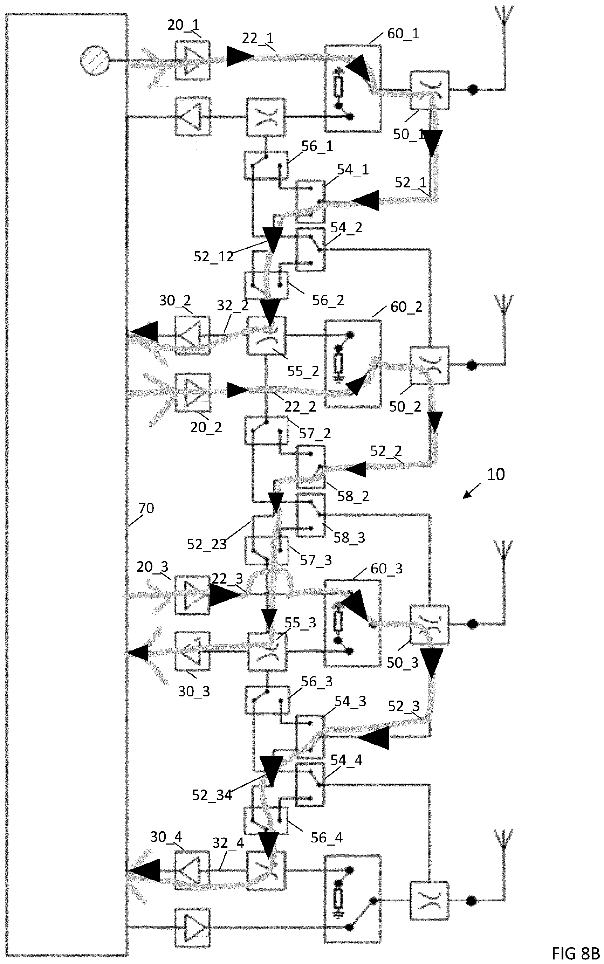

FIG 8B illustrates operation of the circuitry illustrated in FIG 7. FIG 8B illustrates operation of the circuitry illustrated in FIG 8A but at a different time. The dark arrows illustrate coupling paths. One coupling path, indicated by larger dark arrows, extends from the first transmitter circuitry 20_1 to the second receiver circuitry 30_2. One coupling path, indicated by smaller dark arrows, extends from the second transmitter circuitry 20_2 to the third receiver circuitry 30_3. One coupling path, indicated by larger dark arrows, extends from the third transmitter circuitry 20_3 to the fourth receiver circuitry 30_4.

The first transmitter circuitry 20_1 is coupled with the second receiver circuitry 30_2, the second transmitter circuitry 20_2 is simultaneously coupled to the third receiver circuitry 30_3 and the third transmitter circuitry 20_3 is simultaneously coupled to the fourth receiver circuitry 30_4.

The switch circuitry 54_1, 56_2 is configured to selectively couple the first transmitter circuitry 20_1 to the second receiver circuitry 30_2.

The switch circuitry 58_2, 57_3 is configured to selectively couple the second transmitter circuitry 20_2 towards the third receiver circuitry 30_3.

The switch circuitry 54_3, 56_4 is configured to selectively couple the third transmitter circuitry 20_3 towards the fourth receiver circuitry 30_4.

The switch circuitry 54_4, 56_3 is configured to selectively de-couple the fourth transmitter circuitry 20_4 from the third receiver circuitry 30_3.

The switch circuitry 58_3, 57_2 is configured to selectively de-couple the third transmitter circuitry 20_3 from the second receiver circuitry 30_2.

The switch circuitry 54_2, 56_1 is configured to selectively de-couple the second transmitter circuitry 20_2 from the first receiver circuitry 30_1.]

This enables the measurement of M(1, 2), M(2, 3), M(3, 4):

$$M(1,2)= gTx1*gRx2$$

$$M(2, 3)= gTx2*Rx3$$

$$M(3, 4)= gTx3*Rx4$$

It is therefore possible by using the coupling paths illustrated in FIGs 8A and 8B to determine R(Rx, 1, 2), R(Rx, 2, 3), R(Rx, 3, 4).

$$R(Rx, 1, 2)= M(1, 1) / M(1, 2) = gTx1* gRx1 / gTx1* gRx2 = gRx1 /gRx2$$

$$R(Rx, 2, 3)= M(2, 2) / M(2, 3) = gTx2* gRx2 / gTx2* gRx3 = gRx2 /gRx3$$

$$R(Rx, 3, 4)= M(3, 3) / M(3, 4) = gTx3* gRx3 / gTx3* gRx4 = gRx3 /gRx4$$

Referring to FIG 8B, by changing the configuration of switches it is possible to measure M(4, 3), M(3, 2), M(2, 1):

$$M(2,1)= gTx2*gRx1$$

$$M(3, 2)= gTx3*Rx2$$

$$M(4, 3)= gTx4*Rx4$$

The switch circuitry 54_4, 56_3 is configured to selectively couple the fourth transmitter circuitry 20_4 to the third receiver circuitry 30_3.

The switch circuitry 58_3, 57_2 is configured to selectively couple the third transmitter circuitry 20_3 towards the second receiver circuitry 30_2.

The switch circuitry 54_2, 56_1 is configured to selectively couple the second transmitter circuitry 20_2 towards the first receiver circuitry 30_1.

The switch circuitry 54_1, 56_2 is configured to selectively de-couple the first transmitter circuitry 20_1 from the second receiver circuitry 30_2.

The switch circuitry 58_2, 57_3 is configured to selectively de-couple the second transmitter circuitry 20_2 from the third receiver circuitry 30_3.

The switch circuitry 54_3, 56_4 is configured to selectively de-couple the third transmitter circuitry 20_3 from the fourth receiver circuitry 30_4.

It is therefore possible by using the coupling paths illustrated in FIG 8A to determine R(Tx, 1, 2), R(Tx, 2, 3), R(Tx, 3, 4).

The following transmission calibration parameters can be determined:

$$R(Tx, 1, 2)= M(1, 1) / M(2, 1) = gTx1* gRx1 / gTx2* gRx1 = gTx1 /gTx2$$

$$R(Tx, 2, 3)= M(2, 2) / M(3, 2) = gTx2* gRx2 / gTx3* gRx2 = gTx2 /gTx3$$

$$R(Tx, 3, 4)= M(3, 3) / M(4, 3) = gTx3* gRx3 / gTx4* gRx3 = gTx3 /gTx4$$

From the foregoing, it will be appreciated that in at least some examples, the apparatus 10 comprises: means for applying precoding to a signal transmitted by transmitter circuitry 20_i based on:

reception by a first receiver circuitry 30_1 of a signal transmitted by an other transmitter circuitry 20J that is coupled, within the apparatus 10, to and received by the first receiver circuitry;

reception by a second receiver circuitry 30_2 of a signal transmitted by the other transmitter circuitry 20_j that is coupled, within the apparatus 10, to and received by the second receiver circuitry; and

reception at the first receiver circuitry 30_1 or the second receiver circuitry 30_2 of a signal transmitted by the transmitter circuitry 20_i that is coupled, within the apparatus 10, to and received by the respective first receiver circuitry 30_1 or the second receiver circuitry 30_2.

The transmission from one transmitter circuitry to two receiver circuitry enables calibration of the receiver circuitry.

The transmission from two transmitter circuitry to one receiver circuitry enables calibration of the transmitter circuitry.

This enables the measurement of M(j, 1), M(j, 2), and, M(i, 1) or M(i,2)

M(j, 1), M(j, 2) provide for calibration of the receiver circuitry:

$$M(j, 1)* R(Rx, j, 1) =M(j, j)= M(j, 2)* R(Rx, j, 2)$$

M(j, 1), M(i, 1) provide for calibration of the transmitter circuitry:

$$R(Tx, j, i)= M(j, 1) / M(i, 1)$$

or

M(j, 2), M(i, 2) provides for calibration of the transmitter circuitry:

$$R(Tx, j, i)= M(j, 2) / M(i, 2)$$

From the foregoing, it will be appreciated that in at least some examples, the apparatus 10 comprises:

first receiver circuitry 30_1 for receiving a signal;

first transmitter circuitry 20_1 for transmitting a signal;

second receiver circuitry 30_2 for receiving a signal;

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;

means for coupling the first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;

means for coupling the second transmitter circuitry 20_2, within the apparatus 10, to the first receiver circuitry 30_1 or the second receiver circuitry 30_2 wherein a signal transmitted by the second transmitter circuitry 20_2 is coupled, within the apparatus 10, for reception by the first receiver circuitry 30_1 or the second receiver circuitry 30_2;
means for applying precoding to a signal transmitted by the second transmitter circuitry based on:

reception by the first receiver circuitry 30_1 of a signal transmitted by the first transmitter circuitry 20_1 that is coupled, within the apparatus 10, to and received by the first receiver circuitry;
reception by the second receiver circuitry 30_2 of a signal transmitted by the first transmitter circuitry 20_1 that is coupled, within the apparatus 10, to and received by the second receiver circuitry; and
reception at the first receiver circuitry or the second receiver circuitry of a signal transmitted by the second transmitter circuitry 20_2 that is coupled, within the apparatus 10, to and received by the respective first receiver circuitry 30_1 or the second receiver circuitry.

R(Rx, 1, 2) can be determined from M(1,1) and M(1, 2)

$$R(Rx, 1, 2) = M(1, 1) / M(1, 2) = gTx1^* \, gRx1 / gTx1^* \, gRx2 = gRx1 / gRx2$$

R(Tx, 1, 2) can be determined from M(1,1) and M(2,1), where M(1,1) is used for R(Rx, 1, 2).

$$R(Tx, 1, 2) = M(1, 1) / M(2, 1) = gTx1^* \, gRx1 / gTx2^* \, gRx1 = gTx1 / gTx2$$

or
R(Tx, 2, 1) can be determined from M(2,2) and M(1, 2), where M(1,2) is used for R(Rx, 1, 2).

$$R(Tx, 2, 1) = M(2, 2) / M(1, 2) = gTx2^* \, gRx2 / gTx1^* \, gRx2 = gTx2 / gTx1$$

From the foregoing, it will be appreciated that in at least some examples, the apparatus 10 comprises:

first receiver circuitry 30_1 for receiving a signal;
first transmitter circuitry 20_1 for transmitting a signal;
second receiver circuitry 30_2 for receiving a signal;
second transmitter circuitry 20_2 for transmitting a signal;
means for applying different reception compensation to a signal received at the first receiver circuitry 30_1 and to a signal received at the second receiver circuitry 30_2;
means for applying different transmission compensation to a signal transmitted by the first transmitter circuitry 20_1 and to a signal transmitted by the second transmitter circuitry 20_2;
means for calibrating the different reception compensation and the different transmission compensation comprising:

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;
means for coupling the first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;
means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1;
using a signal transmitted by the first transmitter circuitry 20_1 that is coupled, within the apparatus 10, to and received by the first receiver circuitry 30_1 and a signal transmitted by the first transmitter circuitry 20_1 that is coupled, within the apparatus 10, to and received by the second receiver circuitry 30_2 to determine the different reception compensation for application to a signal received at the first receiver circuitry 30_1 and to a signal received at the second receiver circuitry 30_2;
using a signal transmitted by the first transmitter circuitry 20_1 that is coupled, within the apparatus 10, to and received by the first receiver circuitry 30_1 and a signal transmitted by the second transmitter circuitry 20_2 that is coupled, within the apparatus 10, to and received by the first receiver circuitry 30_1 to determine the different transmission compensation for application to a signal transmitted by the first transmitter circuitry 20_1 and to a signal transmitted by the second transmitter circuitry 20_2.

In at least some examples the apparatus also comprises means for coupling the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2.

In at least some examples, the apparatus 10 comprises a first antenna port 40_1; a second antenna port 40_2. The first transmitter circuitry 20_1 is for transmitting a signal via the first antenna port 40_1, the second transmitter circuitry 20_2 is for transmitting a signal via the second antenna port 40_2, the first receiver circuitry 30_1 is for receiving a signal via the first antenna port 40_1, and the second receiver circuitry 30_2 is for receiving a signal via the second antenna port 40_2. The different reception compensation is applied to a signal received at the first receiver circuitry 30_1 via the first antenna port 40_1 and to a signal received at the second receiver circuitry 30_2 via the second antenna port 40_2, and the means for calibrating the different reception compensation determines the different reception compensation for application to a signal received at the first receiver circuitry 30_1 via the first antenna port 40_1 and to a signal received at the second receiver circuitry 30_2 via the second antenna port 40_2. The different transmission compensation is applied to a signal transmitted by the first transmitter circuitry 20_1 via the first antenna port 40_1 and to a signal transmitted by the second transmitter circuitry 20_2 via the second antenna port 40_2, and the means for calibrating the different transmission compensation determines the different transmission compensation for application to a signal transmitted by the first transmitter circuitry 20_1 via the first antenna port 40_1 and to a signal transmitted by the second transmitter circuitry 20_2 via the second antenna port 40_2.

In at least some examples, the apparatus 10 comprises third receiver circuitry 30_3 for receiving a signal; means for applying different reception compensation to signals received at different receiver circuitry; and means for calibrating the different reception compensation comprising:

means for coupling transmitter circuitry, within the apparatus 10, to the third receiver circuitry 30_3 wherein a signal transmitted by the transmitter circuitry is coupled, within the apparatus 10, for reception by the third receiver circuitry 30_3;

using a signal transmitted by the transmitter circuitry that is coupled, within the apparatus 10, to and received by the third receiver circuitry 30_3 and a signal transmitted by the transmitter circuitry that is coupled, within the apparatus 10, to and received by another receiver circuitry to determine the different reception compensation for application to a signal received at the third receiver circuitry 30_3 and to a signal received at the other receiver circuitry.

Thus reception compensation for a particular receiver circuitry 30_j can be determined using a signal transmitted by an arbitrary transmitter circuitry 20_i that is coupled, within the apparatus 10, to and received by the particular receiver circuitry 30_j and a signal transmitted by the arbitrary transmitter circuitry 20_i that is coupled, within the apparatus 10, to and received by another (e.g. reference) receiver circuitry 30_k.

For example, M(i, j) and M(i, k) are determined, from which gRxj /gRxk can be determined. The receiver 30_k can be a reference or can be related to a reference via gRxREF/gRxk, which is R(Rx, REF, k). From which R(Rx, REF, j) can be determined.

$$R(Rx, REF, k) * R(Rx, k, j)$$

$$= R(Rx, REF, k) * gRxk /gRxj$$

$$= gRxREF /gRxk * gRxk /gRxj$$

$$= gRxREF / gRxj$$

$$= R(Rx, REF, j)$$

e.g.

$$i=1, k=1, j=3$$

M(1, 3) and M(1, 1) are determined, from which R(Rx, 1, 3)= gRx1 /gRx3 can be determined from

$$M(1,1)/M(1,3) .$$

$$i=2, k=2, j=3$$

M(2, 3) and M(2, 2) are determined, from which R(Rx, 2, 3)= gRx2 /gRx3 can be determined from M(2,2)/M(2,3) .

The receiver 30_k can be a reference or can be related to a reference via gRxREF/gRxk, which is R(Rx, REF, k).

e.g.

$$R(Rx, 1, 3)= gRx1 /gRx3 = R(Rx, 2, 3)* R(Rx, 1, 2) = gRx2 /gRx3 *gRx1/gRx2 = gRx1 /gRx3$$

In at least some examples, the means for calibrating the different reception compensation comprises:

means for coupling the second transmitter circuitry 20_2, within the apparatus 10, to the third receiver circuitry 30_3 wherein a signal transmitted by the second transmitter circuitry 20_2 is coupled, within the apparatus 10, for reception by the third receiver circuitry 30_3;

means for coupling the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2

using a signal transmitted by the second transmitter circuitry 20_2 that is coupled, within the apparatus 10, to and received by the second receiver circuitry 30_2 and a signal transmitted by the second transmitter circuitry 20_2 that is coupled, within the apparatus 10, to and received by the third receiver circuitry 30_3 to determine the different reception compensation for application to a signal received at the third receiver circuitry 30_3.

This adds measurement of M(2,2) and M(2,3) where M(2,2)= gTx2*gRx2 and M(2, 3)=gTx2*gRx3. This enables determination of R(Rx, 2,3) = M(2,2)/M(2,3)= gRx2/gRx3, the relative compensation for the third receiver circuitry.

Previously M(1,1) and M(1,2) have been measured where M(1,1) = gTx1*gRx1 and M(1,2)=gTx1*gRx2.This enables determination of R(Rx, 1,2) = M(1,1) /M(1, 2)= gRx1/gRx2, the relative compensation for the second receiver circuitry.

The various reception compensation parameters can be determined relative to a fixed reference e.g. Rx1

$$R(Rx, 1,2) = M(1,1)/M(1,2)= gRx1/gRx2$$

$$R(Rx, 2,3) = M(2,2)/M(2,3)= gRx2/gRx3 => R(Rx, 1, 3)= [R(Rx, 1,2)]* R(Rx, 2,3)$$

$$R(Rx, 3,4) = M(3,3)/M(3,4)= gRx3/gRx4 => R(Rx, 1, 4) =[R(Rx, 1,3)]*R(Rx, 3, 4)$$

…

$$R(Rx, i-1,i ) = M(i-1,i-1)/M(i-1,i)= gRxi-1/gRxi => R(Rx, 1, i) =[R(Rx, 1,i-1)]*R(Rx, i-1, i)$$

The [] indicates a value calculated in the previous line. This 'daisy-chain' calculation can also be performed in the other direction.

In at least some examples, the apparatus comprises a third antenna port 40_3. In at least some examples, the third receiver circuitry 30_3 is for receiving a signal via the third antenna port 40_3. Different reception compensation is applied to a signal received at the first receiver circuitry 30_1 via the first antenna port 40_1 and to a signal received at the third receiver circuitry 30_3 via the third antenna port 40_3. The means for calibrating the different reception compensation determines the different reception compensation for application to a signal received at the first receiver circuitry 30_1 via the first antenna port 40_1 and to a signal received at the third receiver circuitry 30_3 via the third antenna port 40_3.

In at least some examples, the apparatus 10 comprises means for applying different transmission compensation to signals transmitted by different transmitter circuitry;

means for calibrating the different transmission compensation comprising:

means for coupling the third transmitter circuitry 20_3, within the apparatus 10, to receiver circuitry wherein a signal transmitted by the third transmitter circuitry 20_3 is coupled, within the apparatus 10, for reception by the receiver circuitry;

using a signal transmitted by the third transmitter circuitry 20_3 that is coupled, within the apparatus 10, to and received by the receiver circuitry and a signal transmitted by another transmitter circuitry that is coupled, within the apparatus 10, to and received by the receiver circuitry to determine the different transmission compensation for application to a signal transmitted by the third transmitter circuitry 20_3 and to a signal transmitted by the other transmitter circuitry.

Thus transmission compensation for a particular transmitter circuitry 20_i can be determined using a signal transmitted by the particular transmitter circuitry 20_i that is coupled, within the apparatus 10, to and received by a receiver circuitry 30_i and a signal transmitted by the a different transmitter circuitry 20_k that is coupled, within the apparatus 10, to and received by that same receiver circuitry 30_i.

For example, M(i, j) and M(k, j) are determined, from which

$$R(Tx, k,i) = M(k,j)/M(i,j) = gTxk*gRxj \,/\, gTxi*gRxj = gTxk \,/gTxi \text{ can be determined.}$$

The transmitter circuitry 20_k can be a reference or can be related to a reference via gTxREF/gTxk, which is R(Tx, REF, k).

From the above R(Tx, REF, i) can be determined.

$$R(Tx, REF, k) * R(Tx, k, i)$$
$$= R(Tx, REF, k) * gTxk \,/gTxi$$
$$= gTxREF \,/gTxk * gTxk \,/gTxi$$
$$= gTxREF \,/ gTxi$$
$$= R(Tx, REF, i)$$

e.g.

i=3, k=1, j=1
M(3,1) and M(1,1) are determined, from which R(Tx, 1,3)= gTx1 /gTx3 can be determined from M(1,1)/M(3,1).

The transmitter circuitry 20_k can be a reference or can be related to a reference via gTxREF/gTxk, which is R(Tx, REF, k) e.g.

$$R(Tx, REF,1)= gTxREF/gTx1 = gTxREF/gTx1* gTx1/gTx3 = R(Tx, REF, 1)*R(Tx, 1, 3)$$

In at least some examples, the means for calibrating the different transmission compensation comprises:

means for coupling the third transmitter circuitry 20_3, within the apparatus 10, to the second receiver circuitry 30_2 wherein a signal transmitted by the third transmitter circuitry 20_3 is coupled, within the apparatus 10, for reception by the second receiver circuitry 30_2;
means for coupling the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2;
using a signal transmitted by the second transmitter circuitry 20_2 that is coupled, within the apparatus 10, to and received by the second receiver circuitry 30_2 and a signal transmitted by the third transmitter circuitry 20_3 that is coupled, within the apparatus 10, to and received by the second receiver circuitry 30_2 to determine the different reception compensation for application to a signal transmitted by the second transmitter circuitry 20_2 and to a signal transmitted by the third transmitter circuitry 20_3.

This adds measurement of M(3,2) and M(2,2) where M(3,2)= gTx3*gRx2 and M(2, 2)=gTx2*gRx2. This enables determination of R(Tx, 2,3) = M(2,2)/M(3,2)= gTx2/gTx3, the relative compensation for the third receiver circuitry.

Previously M(1,1) and M(2,1) have been measured where M(1,1) = gTx1*gRx1 and M(2,1)=gTx2*gRx1. This enables determination of R(Tx, 1,2) = M(1,1)/M(2,1)= gTx1/gTx2, the relative compensation for the second receiver circuitry.

The various transmission compensation parameters can be determined relative to a fixed reference e.g. Tx1

$$R(Tx, 1,2) = M(1,1)/M(2,1)= gTx1/gTx2$$

$$R(Tx, 2,3) = M(2,2)/M(3,2) = gTx2/gTx3 => R(Tx, 1, 3) = [R(Tx, 1,2)]^* R(Tx, 2,3)$$

$$R(Tx, 3,4) = M(3,3)/M(4,3) = gTx3/gTx4 => R(Tx, 1, 4) = [R(Tx, 1,3)]^* R(Tx, 3, 4)$$

$$\ldots$$

$$R(Tx, i-1,i) = M(i-1,i-1)/M(i,i-1) = gTxi-1/gTxi => R(Tx, 1, i) = [R(Tx, 1,i-1)]^* R(Tx, i-1, i)$$

The [] indicates a value calculated in the previous line. This 'daisy-chain' calculation can also be performed in the other direction.

In at least some examples, the apparatus comprises a third antenna port 40_3;

wherein the third transmitter circuitry 20_3 is for transmitting a signal via the third antenna port 40_3;
wherein different transmission compensation is applied to a signal transmitted by the first transmitter circuitry 20_1 via the first antenna port 40_1 and to a signal transmitted by the third transmitter circuitry 20_3 via the third antenna port 40_3;
and wherein calibrating the different transmission compensation determines the different transmission compensation for application to a signal transmitted by the first transmitter circuitry 20_1 via the first antenna port 40_1 and to a signal transmitted by the third transmitter circuitry 20_3 via the third antenna port 40_3.

In some of the examples, a fixed one of the multiple different receiver circuitry is used as a reference receiver circuitry, for example, the first receiver circuitry 30_1. Optionally, a fixed one of the multiple different receiver circuitry can also be used as the second receiver circuitry 30_1 etc.

In some of the examples, a fixed one of the multiple different transmitter circuitry is used as a reference transmitter circuitry, for example, the first transmitter circuitry 20_1. Optionally, a fixed one of the multiple different transmitter circuitry can also be used as the second transmitter circuitry 20_2 etc.

In some of the examples, one of a plurality of different receiver circuitry is selected for use as a reference receiver circuitry, for example, as the first receiver circuitry 30_1. Optionally, one of a plurality of different receiver circuitry is selected for use as the second receiver circuitry 30_2.

In some of the examples, one of a plurality of different transmitter circuitry is selected for use as a reference transmitter circuitry, for example, as the first transmitter circuitry 20_1. Optionally, one of a plurality of different transmitter circuitry is selected for use as the second transmitter circuitry 20_2.

Measurement of mutual-combined transfer functions : $M(i, i) = gTXi^*gRXi$ where $i=1, 2, 3...N$ is achieved by dividing a baseband symbol received at the $i^{th}$ receiver circuitry 30_i by a baseband symbol transmitted by the $i^{th}$ transmitter circuitry 20_i coupled to the $i^{th}$ receiver circuitry 30_i to obtain a mutual-combined transfer function $M(i, i)$ for the first transmitter circuitry 20_1 and the first receiver circuitry 30_1.

Measurement of cross-combined transfer functions: $M(i, j) = gTXi^*gRXj$ $i=1, 2, 3...N-1, j \neq i$ is achieved by dividing a baseband symbol received at the $j^{th}$ receiver circuitry 30_j by a baseband symbol transmitted by the $i^{th}$ transmitter circuitry 20_i coupled to the $i^{th}$ receiver circuitry 30_j to obtain a cross-combined transfer function for the $i^{th}$ transmitter circuitry 20_i and the $j^{th}$ receiver circuitry 30_j;

The reception compensation parameters are found from the mutual-combined transfer functions $M(i,i)$ for the $i^{th}$ transmitter circuitry 20_i and the $i^{th}$ receiver circuitry 30_i and the cross-combined transfer function $M(i,j)$ for the $i^{th}$ transmitter circuitry 20_i and the $j^{th}$ receiver circuitry 30_j by dividing the mutual-combined transfer function for the $i^{th}$ transmitter circuitry 20_i and the $i^{th}$ receiver circuitry 30_i by the cross-combined transfer function for the $i^{th}$ transmitter circuitry 20_i and the $j^{th}$ receiver circuitry 30_j:

$$R(Rx, i,j) = M(i,i)/M(i,j) = gRXi /gRXj; \quad i=1, 2, 3...N, , j \neq i,$$

This is easy to calculate as a daisy chain where $j = i+1$ (or $j=i-1$).

That is where the transmitter circuitry and the receiver circuitry for a cross-combined transfer function are in neighbouring transceivers.

$$R(Rx,i,j) = M(i,i)/M(i,j) = gRXi /gRXj; \quad i=1, 2, 3...N-1, j = i+1,$$

e.g.

$$R(Rx, i,i+1) = M(i,i)/M(i,i+1) = gRXi / gRXi+1 \ i=1, 2, 3...N-1$$

R(Rx, i,i+1) can be converted to R(Rx, 1, i+1)

$$R(Rx, 1, i+1) = R(Rx, 1, i)* R(Rx, i,i+1)$$

Thus $R(Rx, 1, i+1) = \prod_{x=1}^{i} R(Rx, x, x+1)$ , i = 1,2, 3...N-1

The transmission compensation parameters are found from the mutual-combined transfer functions M(i,i) for the $i^{th}$ transmitter circuitry 20_i and the $i^{th}$ receiver circuitry 30_i and the cross-combined transfer function M(j, i) for the $j^{th}$ transmitter circuitry 20_j and the $i^{th}$ receiver circuitry 30_i by

dividing the mutual-combined transfer function for the $i^{th}$ transmitter circuitry 20_i and the $i^{th}$ receiver circuitry 30_i by the cross-combined transfer function for the $j^{th}$ transmitter circuitry 20J and the $i^{th}$ receiver circuitry 30_i:

$$R(Tx, i,j) = M(i,i)/M(j, i) = gTXi / gTXj; \ i=1, 2, 3...N, \ , j \neq i,$$

This is easy to calculate as a daisy chain where j = i+1 (or j=i-1).

That is where the transmitter circuitry and the receiver circuitry for a cross-combined transfer function are in neighbouring transceivers.

$$R(Tx, i,j) = M(i,i)/M(j, i) = gTXi / gTXj; \ i=1, 2, 3...N-1, j = i + 1,$$

e.g.

$$R(Tx,i,i+1) = M(i,i)/M(i+1, i) = gTXi / gTXi+1 \ i=1, 2, 3...N-1$$

R(Tx, i,i+1) can be converted to R(Tx, 1, i+1)

$$R(Tx, 1, i+1) = R(Tx, 1, i)* R(Tx, i,i+1)$$

Thus $R(Tx, 1, i+1) = \prod_{x=1}^{i} R(Tx, x, x+1)$ , i = 1,2, 3...N-1

In some examples, the $i^{th}$ receiver circuitry 30_i and the $i^{th}$ transmitter circuitry 20_i are comprised in $i^{th}$ transceiver circuitry.

In the foregoing description, reference is made to the transmission of signals by transmitter circuitry 20 that is internally coupled, within the apparatus to receiver circuitry 30. The transmitted signal can be a reference signal transmitted for the purpose of calibration. The transmitted signal can be a signal transmitted for a purpose other than calibration that is nevertheless used for calibration. Examples, of such signals would be uplink control or uplink data signals. This enables real-time adjustments to calibration.

It may be desirable to protect the receiver circuitry that is coupled to the transmitter circuitry, by enabling coupling only when a power level of the signal transmitted by the transmitter circuitry is below a threshold value.

The FIGs illustrate various switching networks for coupling the transmitter circuitry 20 to receiver circuitry 30. In at least some examples, the switching network is hardware based and comprises only passive components and RF switches for which linearity and rapid phase shifts should not be a problem or concern.

The switching network provides transmission-selection switching-circuitry for controlling which transmission path a reception path is coupled to.

In some examples, the switching networks are configured to couple a transmitter circuitry 20_i to two physically adjacent receiver circuitry 30_i, 30_i+/-1.

In some of the examples, the switching network is symmetric. For example, the switching network in FIG 5 has reflection symmetry about a midline that is midway between the first antenna port 40_1 and the second antenna port 40_2 and midway between the switches 54_1, 54-2.

Directional couplers can be used to out-couple signals from transmission paths and to in-couple signals into reception paths. In other examples, simple capacitive coupling elements can be used.

In at least some examples, the directional couplers work better and in a predictable manner if all the ports of the coupler structure are terminated at the correct impedance. The resistors/terminations can be "turned on" when the system is in calibration state during uplink.

RF loss in the couplers and switching network need to be high enough to enable the receiver circuitry to remain in a linear range.

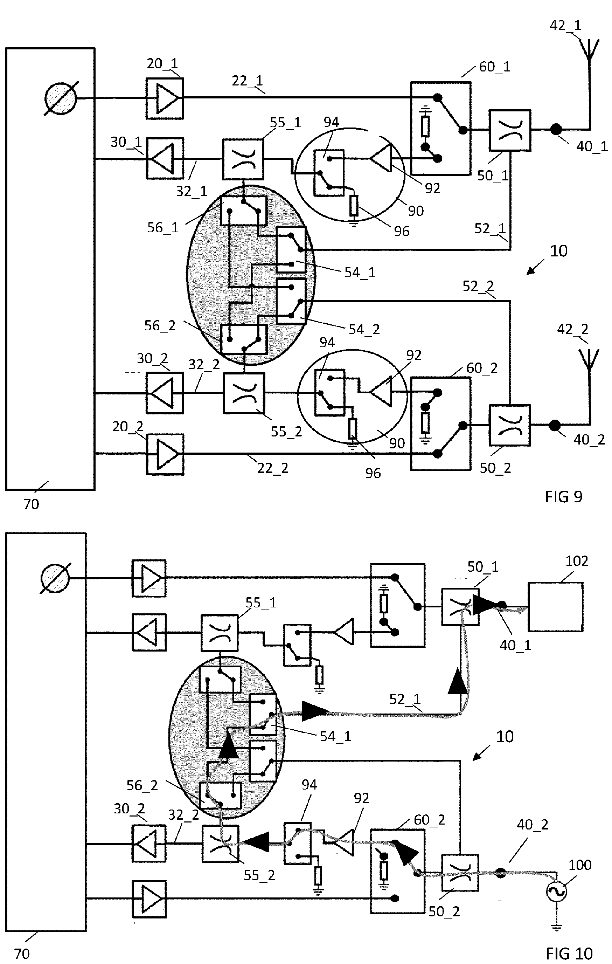

FIG 9 illustrates an example of an adaptation to the apparatus 10 which provides additional isolation of the receiver circuitry 30_i from the transmitter circuitry 20_i.

There is a possibility of coupling of a transmission signal from a transmission path 22_i from the transmitter circuitry 20_i into a reception path 32_i of the adjacent receiver circuitry 30_i. In this example, via the TDD switch 60_i.

The apparatus 10 illustrated provides isolation circuitry 90 for providing additional isolation in a first stage of the reception path 32_i between the TDD switch 60_i and the in-coupler 55_i.

The isolation circuitry 90 comprises an amplifier 92 in the first stage of the reception path 32_i. The amplifier is a low noise amplifier. It has a high input impedance.

The isolation circuitry 90 comprises a switch 94 between the amplifier 92 and the in-coupler 55_i. The switch 94 provides further isolation.

The resistor 96 terminates a port of the directional coupler 55_i at a correct impedance, for example a characteristic impedance such as 50 ohms.

Thus, a low noise amplifier 92 and at least one additional switch 94 are in a reception path to the receiver circuitry 30_i but are not in a coupling path from transmitter circuitry 20_i to the receiver circuitry 30_i.

The receive chain is split into a first stage and a second stage. The first stage is from the TDD switch 60_i to the in-coupler 55_i. The second stage is from the in-coupler 55_i to the receiver circuitry 30_i. The first stage can be turned off during the coupling of the transmitter circuitry 20_i and the receiver circuitry 30_i.

The difference between the paths to the receiver circuitry when calibrating and when receiving via the antenna port 40_i can be accounted for via calibration process as illustrated in FIG 10.

A coupling path is created from the second antenna port 40_2 to the first antenna port 40_1. The coupling path is illustrated via black arrow heads. The coupling path goes via the first stage of the second reception path 32_2 to the coupler 55_2. It then goes via the switching network 56_2, 54_1 to the coupler 50_1 to the first antenna port 40_1.

The path between the coupler 50_1, 55_2 is similar to the path between couplers 50_1, 55_1.

There is therefore an extra factor Ki which multiplies each gRXi, where Ki represents the gain of the first stage of the reception path 32_i.

The apparatus illustrated in FIG 10 can be used to determine Ki during production. The values for Ki can then be stored in memory for use later.

The apparatus 10 therefore has store means permanently storing data that compensates for a difference in a reception path to the receiver circuitry 30_i and a coupling path from the transmitter circuitry 20_i to the first receiver circuitry 30_i.

In the preceding examples, various antennas 42_i are illustrated. The antennas can, in at least some examples, have different directional gain. The maximum gain for antenna 42_i is then in a different direction to the maximum gain for antenna 42J.

In at least some examples, at least some of the antennas 42 are comprised of arrays of antenna elements. In general, antenna arrays in user equipment, are not uniform and linear as the array patterns have directive variation of gain and phase, as well as inter-antenna element distances that are rarely half a wavelength.

It will be appreciated that calibration occurs without a dedicated calibration transceiver.

It will be appreciated that calibration can occur without over the air (OTA) signaling

The above description has focused on the determination of both reception compensation parameters and transmission compensation parameters for the purpose of improving precoding for signal transmission from the apparatus 10.

In some examples, it may be desirable to determine reception compensation parameters for other reasons, for example compensation of received signals or for communication to the network.

In some examples, it may be desirable to determine transmission compensation parameters for other reasons, for example compensation of transmitted signals or for communication to the network.

In some examples, there is provided an apparatus 10 comprising:

first transmitter circuitry 20_1 for transmitting a signal;
first receiver circuitry 30_1 for receiving a signal;
second receiver circuitry 30_2 for receiving a signal;
means for applying different reception compensation to a signal received at the first receiver circuitry 30_1 and to a signal received at the second receiver circuitry 30_2;
means for calibrating the different reception compensation comprising:

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;

means for coupling the first transmitter circuitry 20_1, within the apparatus 10, to the second receiver circuitry 30_2 wherein a signal transmitted by the first transmitter circuitry 20_1 is coupled, within the apparatus 10, for reception by the second receiver circuitry 30_2;

using a signal transmitted by the first transmitter circuitry 20_1 that is coupled, within the apparatus 10, to and received by the first receiver circuitry 30_1 and a signal transmitted by the first transmitter circuitry 20_1 that is coupled, within the apparatus 10, to and received by the second receiver circuitry 30_2 to determine the different reception compensation for application to a signal received at the first receiver circuitry 30_1 and to a signal received at the second receiver circuitry 30_2.

In some examples, this apparatus 10 comprises:

second transmitter circuitry 20_2 for transmitting a signal;
the means for calibrating the different reception compensation comprises:

means for coupling the second transmitter circuitry 20_2, within the apparatus 10, to the third receiver circuitry 30_3 wherein a signal transmitted by the second transmitter circuitry 20_2 is coupled, within the apparatus 10, for reception by the third receiver circuitry 30_3;

means for coupling the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2

using a signal transmitted by the second transmitter circuitry 20_2 that is coupled, within the apparatus 10, to and received by the second receiver circuitry 30_2 and a signal transmitted by the second transmitter circuitry 20_2 that is coupled, within the apparatus 10, to and received by the third receiver circuitry 30_3 to determine the different reception compensation for application to a signal received at the second receiver circuitry 30_2 and to a signal received at the third receiver circuitry 30_3.

In some examples there is provided a method or computer program that enable:

applying different reception compensation to a signal received at different receiver circuitry;
calibrating the different reception compensation comprising:

causing coupling of a first transmitter circuitry 20_1, within the apparatus 10, to a first one of the different receiver circuitry, wherein a signal transmitted by the first transmitter circuitry 20_1 is then coupled, within the apparatus 10, for reception by the first one of the different receiver circuitry;

causing coupling of the first transmitter circuitry 20_1, within the apparatus 10, to a second one of the different receiver circuitry, wherein a signal transmitted by the first transmitter circuitry 20_1 is then coupled, within the apparatus 10, for reception by the second one of the different receiver circuitry;

using a signal transmitted by the first transmitter circuitry 20_1 that is coupled, within the apparatus 10, to and received by the first one of the different receiver circuitry and a signal transmitted by the first transmitter circuitry 20_1 that is coupled, within the apparatus 10, to and received by the second one of the different receiver circuitry to determine the different reception compensation for application to a signal received at the first one of the different receiver circuitry and to a signal received at the second one of the different receiver circuitry.

In some examples, there is provided an apparatus 10 comprising:

first transmitter circuitry 20_1 for transmitting a signal;
second transmitter circuitry 20_2 for transmitting a signal;
first receiver circuitry 30_1 for receiving a signal;
means for applying different transmission compensation to a signal transmitted by the first transmitter circuitry 20_1 and to a signal transmitted by the second transmitter circuitry 20_2;
means for calibrating the different transmission compensation comprising:

means for coupling the first transmitter circuitry 20_1, within the apparatus 10, to the first receiver circuitry 30_1 wherein a signal transmitted by the first transmitter circuitry 20_1 is coupled, within the apparatus 10, for reception by the first receiver circuitry 30_1;

means for coupling the second transmitter circuitry 20_2, within the apparatus 10, to the first receiver circuitry 30_1 wherein a signal transmitted by the second transmitter circuitry 20_2 is coupled, within the apparatus 10, for reception by the first receiver circuitry 30_1;

using a signal transmitted by the first transmitter circuitry 20_1 that is coupled, within the apparatus 10, to and received by the first receiver circuitry 30_1 and a signal transmitted by the second transmitter circuitry 20_2 that is coupled, within the apparatus 10, to and received by the first receiver circuitry 30_1 to determine the different transmission compensation for application to a signal transmitted by the first transmitter circuitry 20_1 and to a signal transmitted by the second transmitter circuitry 20_2.

In some examples, this apparatus 10 comprises:

second receiver circuitry 30_2 for receiving a signal;
the means for calibrating the different transmission compensation comprises:

means for coupling the third transmitter circuitry 20_3, within the apparatus 10, to the second receiver circuitry 30_2 wherein a signal transmitted by the third transmitter circuitry 20_3 is coupled, within the apparatus 10, for reception by the second receiver circuitry 30_2;
means for coupling the second transmitter circuitry 20_2, within the apparatus 10, to the second receiver circuitry 30_2 wherein a signal transmitted by the second transmitter circuitry 20_2 is coupled, within the apparatus 10, for reception by the second receiver circuitry 30_2;
using a signal transmitted by the second transmitter circuitry 20_2 that is coupled, within the apparatus 10, to and received by the second receiver circuitry 30_2 and a signal transmitted by the third transmitter circuitry 20_3 that is coupled, within the apparatus 10, to and received by the second receiver circuitry 30_2 to determine the different reception compensation for application to a signal transmitted by the third transmitter circuitry 20_3.

In some examples there is provided a method or computer program that enable:

applying different transmission compensation to a signal transmitted by different transmitter circuitry second transmitter circuitry 20_2;
calibrating the different transmission compensation comprising:

causing coupling of a first one of the different transmitter circuitry, within the apparatus 10, to a first receiver circuitry 30_1 wherein a signal transmitted by the first one of the different transmitter circuitry is coupled, within the apparatus 10, for reception by the first receiver circuitry 30_1;
causing coupling of a second one of the different transmitter circuitry, within the apparatus 10, to the first receiver circuitry 30_1 wherein a signal transmitted by the second one of the different transmitter circuitry is coupled, within the apparatus 10, for reception by the first receiver circuitry 30_1;
using a signal transmitted by the first one of the different transmitter circuitry that is coupled, within the apparatus 10, to and received by the first receiver circuitry 30_1 and a signal transmitted by the second one of the different transmitter circuitry that is coupled, within the apparatus 10, to and received by the first receiver circuitry 30_1 to determine the different transmission compensation for application to a signal transmitted by the first one of the different transmitter circuitry and to a signal transmitted by the second one of the different transmitter circuitry.

Radio channel reciprocity at a UE is based on Downlink reference signals and enables autonomous non-codebook UL pre-coding at the UE.

The UE determines its precoding by using downlink CSI-RS (Channel State Information-Reference Signal) and leveraging DL-UL reciprocity at the UE TRX (transceiver).

This procedure is based on the following steps:

i) CSI-RSs are sent from the network to the UE, where the UE estimates the channel and calculates a precoder for UL at the UE.
ii) Pre-coded SRSs (Sounding Reference Signal) are sent in UL from the UE to the network based on previous steps.
iii) Network performs a selection of the best SRS and indicates this to the UE using the SRI (SRS Resource Indicator).
iv) PUSCH (Physical Uplink Shared CHannel) transmission uses the latest calculated precoding at the UE based on the indicated SRI.

This procedure assumes a full channel reciprocity between UL and DL. However, the UE RF Front-End is not reciprocal as the UL phase difference between antenna ports can dynamically vary independently from the DL phase difference. This is one of the main reasons that non-codebook based UL-MIMO has not been deployed commercially so far.

Current smart phone implementations do not enable reciprocity between uplink and downlink signals. Channel estimate as determined in the downlink direction can therefore not be used to obtain optimized precoding in the uplink direction.

This problem stems from the different and non-calibrated implementations of the TX and RX circuitry. When the channel is estimated based on the DL signal, the estimation includes the UE RX circuitry 30, however this differs from the TX one. In other words, the DL based channel estimation differs largely from the UL channel, making the DL estimation unusable for optimal precoder estimation.

Root cause behind this problem is the fact that exact phase and amplitude of RF transmit and receive signals at the antenna ports (caused due to distortion/imbalance introduced by RF front ends) is not known. The apparatus 10 provides for calibrating the receive and transmit chains so that the receive channel estimates obtained in the downlink can be leveraged to determine the precoding to use in the uplink.

This apparatus 10 provides a novel circuit and calibration method that can be implemented in a user equipment (UE). This enables amplitude and phase reciprocity calibration in a UE having multiple antenna ports (2 or more).

The proposed circuit is scalable meaning it can be extended to 'n' antenna ports where $\eta \geq 2$ and the combination of the proposed circuit and calibration method can be implemented in any type of UE (smartphone, tablet, laptop, customer premise device, fixed wireless access, vehicle mounted/inbuilt device, etc.) or other apparatus. The apparatus 10 can be used for Base stations or any equipment that contains multiple RX/TX chains.

The switching circuit consists of multiple switches and couplers which are combined in a novel way to enable the circuit to feedback the RF signal available at the input of a given transmit antenna port 40_i back to the RF input section of the receive chain (reception path 32_j) of the same or next adjacent TRX module (j=i, or j=i+/- 1). This feedback framework will enable the UE implementing the proposed circuit to measure the combined response M(i, j) (which includes the effects of RF imperfections, e.g., amplitude and/or phase imbalance) of the transmit and receive chains in the baseband domain.

It is worth mentioning that symmetry is present in the illustrated examples of the switching circuitry.

The switching circuitry only contains passive components and RF switches for which linearity and rapid phase shifts should not be a problem or concern.

The proposed circuit enables the framework to measure the combined response M(i, j) of transmit and receive chains 20_i, 30_j in the baseband from which the transmit and receive calibration coefficients R are computed. The computed receive calibration coefficients R(Rx, i, j) are applied during the downlink operation whereas the transmit calibration coefficients R(Tx, i, j) are applied during the uplink operation, in the baseband, to enable amplitude and phase reciprocity at the UE.

The combination of the proposed circuit with the proposed calibration method will enable reciprocity calibration at the UE. This novel calibration technique neither requires any dedicated calibration transceiver nor any over the air (OTA) signaling, thereby saving both the network resources as well as the cost and physical real estate of an extra calibration transceiver in the UE.

A proposed circuit for 2 antenna port UE scenario is shown in FIG. 5 whereas the extended circuit for 4 antenna port UE scenario is shown in FIG. 7 .

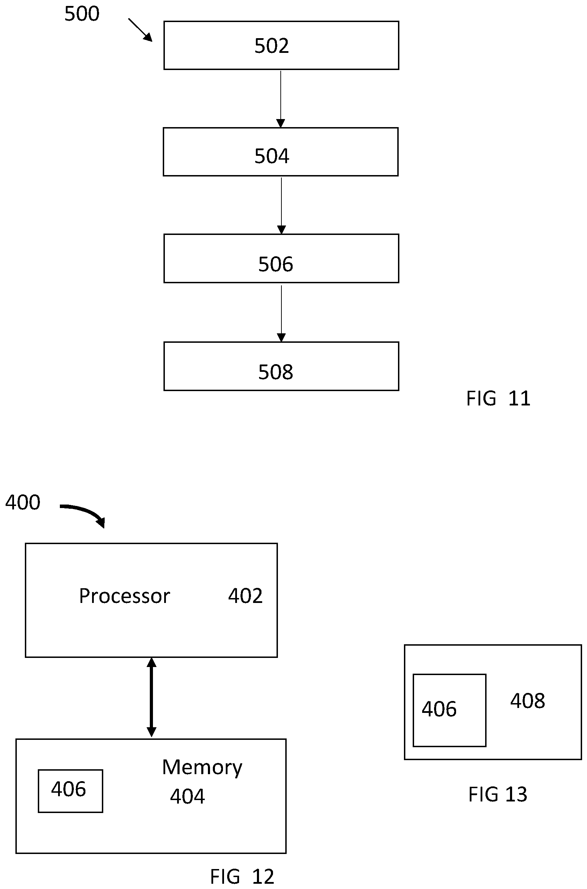

This section describes the proposed calibration procedure to be implemented at the UE 10 for compensating the gain and phase imbalance between the UE's TX and RX chains in the TRX modules. The overall calibration procedure is divided into 3 distinct phases as illustrated in FIG 11.

At block 502, the method comprises measuring a combined response for the same TRX module. Measure mutual combined response M(i, i)

e.g. perform 'n' parallel measurements as follows:

$$Mpp = gTXp*gRXp,$$

where p = 1,...,n (i.e., M(1,1), M(2,2), M(3,3), ..., M(n, n))

At block 504, the method comprises measuring a combined response for adjacent TRX module. Measure cross combined response M(i,i+1) and/or M(i,i+1).

e.g. Perform 'n-1' parallel measurements as follows:

$$Mpq = gTXp*gRXq$$

where p = 1, ... , n-1; and q = (p + 1) (i.e., M(1,2), M(2,3), ..., M((n-1), n) )

At block 506, the method comprises determining the transmitter and receiver calibration coefficients R.

Calculate 'n-1' coefficients, R(Rx, p, q) as follows:

$$R(Rx, p, q) = M(p, p)/M(p, q),$$

where p = 1, ... , n-1; and (q = p + 1)

Calculate Calibration coefficients for RX chain '2' to RX chain 'n' as follows:

$$R(Rx, 1, r) = \prod_{p=1}^{r-1} R(Rx, p, q) = R(Rx, 1, 2)*R(Rx, 2,3)*...*R(Rx, (r-1), r),$$

where (1 <r<=n)

Calculate 'n-1' coefficients, R(Tx, p, q) as follows:

$$R(Tx, p, q) = M(p, q)/M(q, q),$$

where p = 1, ... , n-1; and (q = p + 1)

Or

$$R(Tx, p, q) = M(p, p)/M(q, p),$$

where p = 1, ... , n-1; and (q = p + 1)

Calculate Calibration coefficients for TX chain '2' to TX chain 'n' as follows:

$$R(TX, 1, t) = \prod_{p=1}^{t-1} R(Tx, p, q) = R(Tx, 1, 2)*R(Tx, 2, 3)*...*R(Tx, (t-1), t),$$

where (1<t<=n)

At block 508, the method 500 applies the calibration.

Treating the receiver circuitry 30_j as a reference (no calibration required), then apply transmission calibration coefficient R(Rx, j, i)= gRXj/gRXi to the signal received by the receiver circuitry 30_i

Treating the transmitter circuitry 20_k as a reference (no calibration required), then apply transmission calibration coefficient R(Tx, k, i)= gTXk/gTXi to the signal transmitted by the transmitter circuitry 20_i

The above described approach has the following advantages:

No need for separate calibration receiver as the normal receiver is part of the calibration path.

This enables very fast update and so in turn makes it easy to adapt to user interactions (antenna loaded by the human hand) that may impact this.

Calibration can be done during any transmit scheduling, no need for special measurement gaps.

TX phase coherence as well as means to ensure RX/TX reciprocity are calibrated simultaneously.

Couplers are used to feed the signal from the uplink (TX) back to the receive circuitry whereby "normal" gain settings for receive and transmit circuitry can be used.

RF loss in the out-couplers from the transmission paths as well as the loss in the RF switch network, need to be high enough to enable the receive chain (receiver circuitry 30) to remain in the linear range in case maximum gain is set for both the transmit and receive circuitry which is likely in case a UE is at "Cell edge".

Intermodulation according to 3GPP is tested with unwanted signal levels of -46 dBm, while the wanted signal for some bands is set to about -91 dBm. The receiver can therefore not be expected to be perfectly within its linear range when the receive input power is above -46 dBm within a few dB. Since output power might be as high as 23 dBm should the combined loss in the RF switches and couplers mentioned above be more than 23 + 46 dB = 69 dB.

It may be difficult to achieve more than 69 dB isolation in one RF switch This can be solved by splitting the receive chain and enable the first gain stage in the receive chain to be turned off and adding an additional switch that provides additional RF isolation as illustrated on FIG. 9. 30 dB isolation in an RF switch is practically possible and the isolation in a LNA gain stage that is "off" can also be designed to be about 30 dB. Combined practical isolation from the RX/TX switch, to receive input, can therefore be up to 90 dB. Exact isolation numbers strongly depend on the used technology and the exact frequency. All the means illustrated on FIG. 9 may therefore not be required for all implementation cases.

An advantage of the solution on FIG. 9 compared with FIG. 5 is that the insertion loss of the couplers, is not affecting the receive noise figure very much in normal receive mode since the coupler is inserted at the output of the first LNA stage.

The couplers may be designed as simple elements such as capacitive coupling elements or inductive coupling elements or resistors. Another solution is however directional couplers. The system is then less sensitive to mismatch on the antenna ports as the reflected signal from the antenna terminal is attenuated as compared with use of simple capacitive coupling elements.

Directional coupler works better and in a predictable manner if all the ports of the coupler structure are terminated at the correct impedance. The resistors/terminations are "turned on" as indicated on FIG. 9 when the system is in calibration state during uplink.

Absorptive RX/TX switches are implied in FIG. 9 as well as on the figures. Higher RF isolation is normally achieved by use of absorptive switches where the "unused" or open ports are terminated to 50 ohms. They also provide proper termination of the directional couplers as illustrated on the figures.

Phase and amplitude response of the LNA stages can be included in a calibration processes. This inclusion can occur in the design phase and characterization of the system and compensated for by adding constants K1 & K22 to gRX1 & gRX2. The calibration or corrections "K1 & K2" as determined in FIG 10 are stored during the production process of the UE in the factory and used to correct/compensate gRX1 & gRX2 during normal use.

Fig 12 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 12 the controller 400 may be implemented using instructions that enable hardware functionality, for example, by using executable instructions 406 in a general-purpose or special-purpose processor 402 that may be stored on a machine readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores instructions, program, or code 406 that controls the operation of the apparatus 10 when loaded into the processor 402. The computer program instructions, program or code 406, provide the logic and routines that enables the apparatus 10 to perform the methods illustrated in the accompanying FIGs. The processor 402 by reading the memory 404 is configured to load and execute the instructions, program, or code 406.

The apparatus 10 comprises:

at least one processor 402; and
at least one memory 404 storing instructions that, when executed by the at least one processor 402, cause the apparatus at least to:

applying different reception compensation to a signal received at different receiver circuitry second receiver circuitry 30_2;
calibrating the different reception compensation comprising:

causing coupling of a first transmitter circuitry 20_1, within the apparatus 10, to a first one of the different receiver circuitry wherein a signal transmitted by the first transmitter circuitry 20_1 is then coupled, within the apparatus 10, for reception by the first one of the different receiver circuitry;
causing coupling of the first transmitter circuitry 20_1, within the apparatus 10, to a second one of the different receiver circuitry wherein a signal transmitted by the first transmitter circuitry 20_1 is then coupled, within the apparatus 10, for reception by the second one of the different receiver circuitry;
using a signal transmitted by the first transmitter circuitry 20_1 that is coupled, within the apparatus 10, to and received by the first one of the different receiver circuitry and a signal transmitted by the first transmitter circuitry 20_1 that is coupled, within the apparatus 10, to and received by the second one of the different receiver circuitry to determine the different reception compensation for application to a signal received at the first one of the different receiver circuitry and to a signal received at the second one of the different receiver circuitry; applying different transmission compensation to a signal transmitted by different transmitter circuitry second transmitter circuitry 20_2;

calibrating the different transmission compensation comprising:

causing coupling of a first one of the different transmitter circuitry, within the apparatus 10, to a first receiver circuitry 30_1 wherein a signal transmitted by the first one of the different transmitter circuitry is coupled, within the apparatus 10, for reception by the first receiver circuitry 30_1;
causing coupling of a second one of the different transmitter circuitry, within the apparatus 10, to the first receiver circuitry 30_1 wherein a signal transmitted by the second one of the different transmitter circuitry is coupled, within the apparatus 10, for reception by the first receiver circuitry 30_1;
using a signal transmitted by the first one of the different transmitter circuitry that is coupled, within the apparatus 10, to and received by the first receiver circuitry 30_1 and a signal transmitted by the second one of the different transmitter circuitry that is coupled, within the apparatus 10, to and received by the first receiver circuitry 30_1 to determine the different transmission compensation for application to a signal transmitted by the first one of the different transmitter circuitry and to a signal transmitted by the second one of the different transmitter circuitry.

As illustrated in Fig 13, the instructions, program, or code 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

The term "non-transitory" as used herein, is a limitation of the medium itself (i.e., tangible, not a signal ) as opposed to a limitation on data storage persistency (e.g., RAM vs. ROM).

Computer program instructions for causing an apparatus to perform at least the following or for performing at least the following:

apply different reception compensation to a signal received at different receiver circuitry second receiver circuitry 30_2;
calibrate the different reception compensation comprising:

causing coupling of a first transmitter circuitry 20_1, within the apparatus 10, to a first one of the different receiver circuitry wherein a signal transmitted by the first transmitter circuitry 20_1 is then coupled, within the apparatus 10, for reception by the first one of the different receiver circuitry;
causing coupling of the first transmitter circuitry 20_1, within the apparatus 10, to a second one of the different receiver circuitries wherein a signal transmitted by the first transmitter circuitry 20_1 is then coupled, within the apparatus 10, for reception by the second one of the different receiver circuitry;
using a signal transmitted by the first transmitter circuitry 20_1 that is coupled, within the apparatus 10, to and received by the first one of the different receiver circuitry and a signal transmitted by the first transmitter circuitry 20_1 that is coupled, within the apparatus 10, to and received by the second one of the different receiver circuitry to determine the different reception compensation for application to a signal received at the first one of the different receiver circuitry and to a signal received at the second one of the different receiver circuitry;

apply different transmission compensation to a signal transmitted by different transmitter circuitry second transmitter circuitry 20_2;
calibrate the different transmission compensation comprising:

causing coupling of a first one of the different transmitter circuitry, within the apparatus 10, to a first receiver circuitry 30_1 wherein a signal transmitted by the first one of the different transmitter circuitry is coupled, within the apparatus 10, for reception by the first receiver circuitry 30_1;
causing coupling of a second one of the different transmitter circuitries, within the apparatus 10, to the first receiver circuitry 30_1 wherein a signal transmitted by the second one of the different transmitter circuitry is coupled, within the apparatus 10, for reception by the first receiver circuitry 30_1;
using a signal transmitted by the first one of the different transmitter circuitry that is coupled, within the apparatus 10, to and received by the first receiver circuitry 30_1 and a signal transmitted by the second one of the different transmitter circuitry that is coupled, within the apparatus 10, to and received by the first receiver circuitry 30_1 to determine the different transmission compensation for application to a signal transmitted by the first one of the different transmitter circuitry and to a signal transmitted by the second one of the different transmitter circuitry.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:

(a) hardware-only circuitry implementations (such as implementations in only analog and/or digital circuitry) and
(b) combinations of hardware circuits and software, such as (as applicable):

i.a combination of analog and/or digital hardware circuit(s) with software/firmware and
ii.any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10 can, for example be a module. A controller 400 of the apparatus 10 can, for example be a module.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

**Claims**

1. An apparatus comprising:

first receiver circuitry for receiving a signal;
first transmitter circuitry for transmitting a signal;
second receiver circuitry for receiving a signal;
second transmitter circuitry for transmitting a signal;
means for applying different reception compensation to a signal received at the first receiver circuitry and to a signal received at the second receiver circuitry;
means for applying different transmission compensation to a signal transmitted by the first transmitter circuitry and to a signal transmitted by the second transmitter circuitry;
means for calibrating the different reception compensation and the different transmission compensation comprising:

means for coupling the first transmitter circuitry, within the apparatus, to the first receiver circuitry wherein a signal transmitted by the first transmitter circuitry is coupled, within the apparatus, for reception by the first receiver circuitry;
means for coupling the first transmitter circuitry, within the apparatus, to the second receiver circuitry wherein a signal transmitted by the first transmitter circuitry is coupled, within the apparatus, for reception by the second receiver circuitry;
means for coupling the second transmitter circuitry, within the apparatus, to the first receiver circuitry wherein a signal transmitted by the second transmitter circuitry is coupled, within the apparatus, for reception by the first receiver circuitry;
using a signal transmitted by the first transmitter circuitry that is coupled, within the apparatus, to and received by the first receiver circuitry and a signal transmitted by the first transmitter circuitry that is coupled, within the apparatus, to and received by the second receiver circuitry to determine the different reception compensation for application to a signal received at the first receiver circuitry and to a signal received at the second receiver circuitry;
using a signal transmitted by the first transmitter circuitry that is coupled, within the apparatus, to and received by the first receiver circuitry and a signal transmitted by the second transmitter circuitry that is coupled, within the apparatus, to and received by the first receiver circuitry to determine the different transmission compensation for application to a signal transmitted by the first transmitter circuitry and to a signal transmitted by the second transmitter circuitry.

2. An apparatus as claimed in claim 1, comprising:

third receiver circuitry for receiving a signal;
means for applying different reception compensation to signals received at different receiver circuitry;
means for calibrating the different reception compensation comprising:

means for coupling transmitter circuitry, within the apparatus, to the third receiver circuitry wherein a signal transmitted by the transmitter circuitry is coupled, within the apparatus, for reception by the third receiver circuitry;
using a signal transmitted by the transmitter circuitry that is coupled, within the apparatus, to and received by the third receiver circuitry and a signal transmitted by the transmitter circuitry that is coupled, within the apparatus, to and received by another receiver circuitry to determine the different reception compensation for application to a signal received at the third receiver circuitry and to a signal received at the other receiver circuitry.

3. An apparatus as claimed in any preceding claim, comprising:

third receiver circuitry for receiving a signal;
the means for calibrating the different reception compensation comprises:

means for coupling the second transmitter circuitry, within the apparatus, to the third receiver circuitry wherein a signal transmitted by the second transmitter circuitry is coupled, within the apparatus, for reception by the third receiver circuitry;

means for coupling the second transmitter circuitry, within the apparatus, to the second receiver circuitry wherein a signal transmitted by the second transmitter circuitry is coupled, within the apparatus, for reception by the second receiver circuitry

using a signal transmitted by the second transmitter circuitry that is coupled, within the apparatus, to and received by the second receiver circuitry and a signal transmitted by the second transmitter circuitry that is coupled, within the apparatus, to and received by the third receiver circuitry to determine the different reception compensation for application to a signal received at the second receiver circuitry and to a signal received at the third receiver circuitry.

4. An apparatus as claimed in any preceding claim, comprising:

third transmitter circuitry for transmitting a signal;
means for applying different transmission compensation to signals transmitted by different transmitter circuitry;
means for calibrating the different transmission compensation comprising:

means for coupling the third transmitter circuitry, within the apparatus, to receiver circuitry wherein a signal transmitted by the third transmitter circuitry is coupled, within the apparatus, for reception by the receiver circuitry;

using a signal transmitted by the third transmitter circuitry that is coupled, within the apparatus, to and received by the receiver circuitry and a signal transmitted by another transmitter circuitry that is coupled, within the apparatus, to and received by the receiver circuitry to determine the different transmission compensation for application to a signal transmitted by the third transmitter circuitry and to a signal transmitted by the other transmitter circuitry.

5. An apparatus as claimed in claim any preceding , comprising:
the means for calibrating the different transmission compensation comprises:

means for coupling the third transmitter circuitry, within the apparatus, to the second receiver circuitry wherein a signal transmitted by the third transmitter circuitry is coupled, within the apparatus, for reception by the second receiver circuitry;

means for coupling the second transmitter circuitry, within the apparatus, to the second receiver circuitry wherein a signal transmitted by the second transmitter circuitry is coupled, within the apparatus, for reception by the second receiver circuitry;

using a signal transmitted by the second transmitter circuitry that is coupled, within the apparatus, to and received by the second receiver circuitry and a signal transmitted by the third transmitter circuitry that is coupled, within the apparatus, to and received by the second receiver circuitry to determine the different reception compensation for application to a signal transmitted by the second transmitter circuitry and to a signal transmitted by the third transmitter circuitry.

6. An apparatus as claimed in any preceding claim, comprising multiple different receiver circuitry, wherein a fixed one of the multiple different receiver circuitry is the first receiver circuitry and wherein a fixed one of the multiple different receiver circuitry is the second receiver circuitry.

7. An apparatus as claimed in any preceding claim, means for calibrating the different reception compensation comprises means for:

dividing a baseband symbol received at the first receiver circuitry by a baseband symbol transmitted by the first transmitter circuitry coupled to the first receiver circuitry to obtain a mutual-combined transfer function for the first transmitter circuitry and the first receiver circuitry;

dividing a baseband symbol received at the second receiver circuitry by a baseband symbol transmitted by the first transmitter circuitry coupled to the second receiver circuitry to obtain a cross-combined transfer function for the first transmitter circuitry and the second receiver circuitry;

dividing the mutual-combined transfer function for the first transmitter circuitry and the first receiver circuitry by the cross-combined transfer function for the first transmitter circuitry and the second receiver circuitry.

8. An apparatus as claimed in any preceding claim, wherein the means for calibrating the different compensation is operational during uplink transmission from the apparatus to a transmission reception point for purposes other than calibrating the different compensation.

9. An apparatus as claimed in any preceding claim, comprising a symmetric switching network for coupling the first transmitter circuitry to the first receiver circuitry or the second receiver circuitry and for coupling the second transmitter circuitry to the first receiver circuitry or the second receiver circuitry.

10. An apparatus as claimed in any preceding claim, comprising a low noise amplifier and multiple switches that are in a reception path to the first receiver circuitry but are not in a coupling path from the first transmitter circuitry to the first receiver circuitry.

11. An apparatus as claimed in any preceding claim, comprising:

store means permanently storing data that compensates for a difference in a reception path to the first receiver circuitry and a coupling path from the first transmitter circuitry to the first receiver circuitry; and
store means for permanently storing data that compensates for a difference in a reception path to the second receiver circuitry and a coupling path from the second transmitter circuitry to the second receiver circuitry.

12. An apparatus as claimed in any preceding claim, comprising a first antenna associated with the first transmitter circuitry and with the first receiver circuitry and a second antenna associated with the second transmitter circuitry and with the second receiver circuitry, wherein the first antenna has maximum gain in a first direction and the second antenna has maximum gain in a second direction different to the first direction

13. An apparatus as claimed in any preceding claim, configured as user equipment.

14. A computer program that when run by one or more processors of an apparatus enables the apparatus to perform:

applying different reception compensation to a signal received at different receiver circuitry;
means for calibrating the different reception compensation comprising:

causing coupling of a transmitter circuitry, within the apparatus, to a first one of the different receiver circuitry wherein a signal transmitted by the transmitter circuitry is then coupled, within the apparatus, for reception by the first one of the different receiver circuitry;
causing coupling of the transmitter circuitry, within the apparatus, to a second one of the different receiver circuitry wherein a signal transmitted by the transmitter circuitry is then coupled, within the apparatus, for reception by the second one of the different receiver circuitry;
using a signal transmitted by the transmitter circuitry that is coupled, within the apparatus, to and received by the first one of the different receiver circuitry and a signal transmitted by the transmitter circuitry that is coupled, within the apparatus, to and received by the second one of the different receiver circuitry to determine the different reception compensation for application to a signal received at the first one of the different receiver circuitry and to a signal received at the second one of the different receiver circuitry.
applying different transmission compensation to a signal transmitted by different transmitter circuitry;

means for calibrating the different transmission compensation comprising:

causing coupling of a first one of the different transmitter circuitry, within the apparatus, to a receiver circuitry wherein a signal transmitted by the first one of the different transmitter circuitry is coupled, within the apparatus, for reception by the receiver circuitry;
causing coupling of a second one of the different transmitter circuitry, within the apparatus, to the receiver circuitry wherein a signal transmitted by the second one of the different transmitter circuitry is coupled, within the apparatus, for reception by the receiver circuitry;
using a signal transmitted by the first one of the different transmitter circuitry that is coupled, within the apparatus, to and received by the receiver circuitry and a signal transmitted by the second one of the different transmitter circuitry that is coupled, within the apparatus, to and received by the receiver circuitry to determine the different transmission compensation for application to a signal transmitted by the first one of the different transmitter circuitry and to a signal transmitted by the second one of the different transmitter circuitry.

15. A method comprising:

applying different reception compensation to a signal received at different receiver circuitry;
calibrating the different reception compensation comprising:

causing coupling of a transmitter circuitry, within the apparatus, to a first one of the different receiver circuitry wherein a signal transmitted by the transmitter circuitry is then coupled, within the apparatus, for reception by the first one of the different receiver circuitry;

causing coupling of the transmitter circuitry, within the apparatus, to a second one of the different receiver circuitry wherein a signal transmitted by the transmitter circuitry is then coupled, within the apparatus, for reception by the second one of the different receiver circuitry;

using a signal transmitted by the transmitter circuitry that is coupled, within the apparatus, to and received by the first one of the different receiver circuitry and a signal transmitted by the transmitter circuitry that is coupled, within the apparatus, to and received by the second one of the different receiver circuitry to determine the different reception compensation for application to a signal received at the first one of the different receiver circuitry and to a signal received at the second one of the different receiver circuitry.

applying different transmission compensation to a signal transmitted by different transmitter circuitry;
calibrating the different transmission compensation comprising:

means for causing coupling of a first one of the different transmitter circuitry, within the apparatus, to a receiver circuitry wherein a signal transmitted by the first one of the different transmitter circuitry is coupled, within the apparatus, for reception by the receiver circuitry;

means for causing coupling of a second one of the different transmitter circuitry, within the apparatus, to the receiver circuitry wherein a signal transmitted by the second one of the different transmitter circuitry is coupled, within the apparatus, for reception by the receiver circuitry;

using a signal transmitted by the first one of the different transmitter circuitry that is coupled, within the apparatus, to and received by the receiver circuitry and a signal transmitted by the second one of the different transmitter circuitry that is coupled, within the apparatus, to and received by the receiver circuitry to determine the different transmission compensation for application to a signal transmitted by the first one of the different transmitter circuitry and to a signal transmitted by the second one of the different transmitter circuitry.

20_1 TX1 22_1 ANT PORT 1 10
30_1 52_11 40_1
RX1

M(1,1)= gTx1*gRx1

30_2 RX2
20_2 TX2 ANT PORT 2 40_2

FIG 1A

20_1 TX1 22_1 ANT PORT 1 10
30_1 40_1
RX1
52_12 M(1, 2)=gTx1*gRx2
30_2 RX2
20_2 TX2 ANT PORT 2 40_2

FIG 1B

20_1 TX1 ANT PORT 1 10
30_1 40_1
RX1

M(2,2)= gTx2*gRx2
30_2 RX2
52_22
20_2 TX2 ANT PORT 2 40_2
22_2

FIG 1C

20_1 TX1 ANT PORT 1 10
30_1 40_1
RX1
52_21 M(2, 1) =gTx2*gRx1
30_2 RX2
20_2 TX2 ANT PORT 2 40_2
22_2

FIG 1D

20_1 · TX1 22_1 22_1 · ANT PORT 1 · 10

52_11

30_1 · RX1 · gTx1*gRx1 · 40_1

gTx2*gRx2

30_2 · RX2 · 52_22

22_2 · ANT PORT 2

20_2 · TX2 · 40_2

FIG 2A

20_1 · TX1 · 22_1 · ANT PORT 1 · 10

52_12

30_1 · RX1 · 40_1

gTx1*gRx2

30_2 · RX2

52_21 · gTx2*gRx1 · ANT PORT 2

20_2 · TX2 · 40_2

22_2 · FIG 2B

20_1 · TX1 · 22_1 · ANT PORT 1 · 10

52_11 · 50_1

30_1 · RX1 · 55_1

52_21 · 52_12 · 40_1

30_2 · RX2 · 55_2

52_22 · ANT PORT 2

20_2 · TX2 · 40_2

22_2 · 50_2 · FIG 3

20_1 · TX1 · 22_1 · 60_1 · ANT PORT 1 · 10

30_1 · RX1 · 54_1 · 40_1

56_1 · 52_12 · 52_21

56_2 · 54_2

30_2 · RX2

20_2 · TX2 · ANT PORT 2 · 40_2

60_2 · FIG 4

FIG 5

FIG 6A

FIG 6B

FIG 7

FIG 8A

FIG 8B

FIG 9

FIG 10

500

| 502 |
| --- |

↓

| 504 |
| --- |

↓

| 506 |
| --- |

↓

| 508 |
| --- |

FIG 11

400

| Processor          402 |
| --- |

↕

| Memory<br>406      404 |
| --- |

FIG 12

| 406    408 |
| --- |

FIG 13

**EUROPEAN SEARCH REPORT**

Application Number

EP 24 18 7081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 978 302 A (BEIJING GUOXIN HANGYU TECH CO LTD) 3 May 2024 (2024-05-03) * paragraphs [0034] - [0044] * ----- | 1-15 | INV. H04B17/14 H04B17/21 |
| A | US 2023/188226 A1 (MOCHIZUKI TAKUJI [JP]) 15 June 2023 (2023-06-15) * paragraphs [0162] - [0183] * ----- | 1-15 | |

TECHNICAL FIELDS
SEARCHED     (IPC)

H04B

The present search report has been drawn up for all claims

| Place of search | Date of completion of the search | Examiner |
|---|---|---|
| The Hague | 5 December 2024 | Lustrini, Donato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7081

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| CN 117978302 | A | 03-05-2024 | NONE | | |
| US 2023188226 | A1 | 15-06-2023 | JP | 2023088050 A | 26-06-2023 |
| | | | US | 2023188226 A1 | 15-06-2023 |

EPO FORM P0459

For more details about this annex : see Official Journal of the European Patent Office, No. 12/82